# EUROPEAN PATENT SPECIFICATION

(11) **EP 4 535 279 B1**
(45) Date of publication and mention of the grant of the patent: **11.11.2026**
(21) Application number: 22958645.8
(22) Date of filing: 14.12.2022
(51) Int. Cl.: G06T 5/00, G06T 5/60, G06T 5/70, G06N 3/08

(54) **IMAGE NOISE REDUCTION PROCESSING METHOD AND APPARATUS, DEVICE, STORAGE MEDIUM, AND PROGRAM PRODUCT**
VERFAHREN UND VORRICHTUNG ZUR BILDRAUSCHMINDERUNG, VORRICHTUNG, SPEICHERMEDIUM UND PROGRAMMPRODUKT
PROCÉDÉ ET APPAREIL DE TRAITEMENT DE RÉDUCTION DE BRUIT D'IMAGE, DISPOSITIF, SUPPORT DE STOCKAGE ET PRODUIT-PROGRAMME

(30) Priority: 16.09.2022 CN 202211128666
(43) Date of publication of application: 09.04.2025
(73) Proprietor: Guangzhou Anyka Microelectronics Co., Ltd., Guangzhou, Guangdong 510555 (CN)
(72) Inventor: PAN, Yefeng, Guangzhou, Guangdong 510555 (CN); HU, Norman Shengfa, Guangzhou, Guangdong 510555 (CN)
(74) Representative: HGF
(86) International application number: PCT/CN2022/138842
(87) International publication number: WO 2024/055458

(56) References cited:
- CN-A- 111 199 516
- CN-A- 113 344 827
- CN-A- 114 913 094
- CN-A- 115 471 417
- US-A1- 2022 147 732
- PARK BUMJUN ET AL: "Densely Connected Hierarchical Network for Image Denoising", 2019 IEEE/CVF CONFERENCE ON COMPUTER VISION AND PATTERN RECOGNITION WORKSHOPS (CVPRW), IEEE, 16 June 2019 (2019-06-16), pages 2104 - 2113, XP033747262, DOI: 10.1109/CVPRW.2019.00263
- LIU PENGJU ET AL: "Multi-level Wavelet-CNN for Image Restoration", 2018 IEEE/CVF CONFERENCE ON COMPUTER VISION AND PATTERN RECOGNITION WORKSHOPS (CVPRW), IEEE, 18 June 2018 (2018-06-18), pages 886 - 88609, XP033475414, DOI: 10.1109/CVPRW.2018.00121
- JIA FAN ET AL: "DDUNet: Dense Dense U-Net with Applications in Image Denoising", 2021 IEEE/CVF INTERNATIONAL CONFERENCE ON COMPUTER VISION WORKSHOPS (ICCVW), IEEE, 11 October 2021 (2021-10-11) - 25 July 2025 (2025-07-25), pages 354 - 364, XP034027699, DOI: 10.1109/ICCVW54120.2021.00044

## Description

### TECHNICAL FIELD

The present application relates to the field of image processing technologies, and in particular to an image noise reduction processing method and apparatus, a device, a storage medium, and a program product.

### BACKGROUND

Image noise reduction is a key work in the field of image processing. An image signal processor (ISP) chip is mainly configured to perform image processing on real-time video images captured by a terminal, which requires high real-time performance for an image noise reduction algorithm in terms of image noise reduction processing.

However, current image noise reduction algorithms cannot simultaneously achieve an excellent noise reduction effect and meet the real-time requirements of the ISP chip.

PARK BUMJUN ET AL ("Densely Connected Hierarchical Network for Image Denoising", 2019 IEEE/CVF CONFERENCE ON COMPUTER VISION AND PATTERN RECOGNITION WORKSHOPS (CVPRW), IEEE, 16 June 2019, pages 2104-2113, XP033747262, DOI: 10.1109/CVPRW.2019.00263) provides a densely connected hierarchical image denoising network (DHDN). The proposed network improves the image denoising performance by applying the hierarchical architecture of the modified U-Net, this enables the network to use a larger number of parameters than other methods. In addition, the network induces feature reuse and solve the vanishing-gradient problem by applying dense connectivity and residual learning to our convolution blocks and network.

LIU PENGJU ET AL ("Multi-level Wavelet-CNN for Image Restoration", 2018 IEEE/CVF CONFERENCE ON COMPUTER VISION AND PATTERN RECOGNITION WORKSHOPS (CVPRW), IEEE, 18 June 2018, pages 886-88609, XP033475414, DOI: 10.1109/CVPRW.2018.00121) provides a novel multi-level wavelet CNN (MWCNN) model for better tradeoff between receptive field size and computational efficiency. With the modified U-Net architecture, wavelet transform is introduced to reduce the size of feature maps in the contracting subnetwork. Furthermore, another convolutional layer is further used to decrease the channels of feature maps. In the expanding subnetwork, inverse wavelet transform is then deployed to reconstruct the high resolution feature maps. Our MWCNN can also be explained as the generalization of dilated filtering and subsampling, and can be applied to many image restoration tasks.

JIA FAN ET AL ("DDUNet: Dense Dense U-Net with Applications in Image Denoising", 2021 IEEE/CVF INTERNATIONAL CONFERENCE ON COMPUTER VISION WORKSHOPS (ICCVW), IEEE, 11 October 2021, pages 354-364, XP034027699, DOI: 10.1109/ICCVW54120.2021.00044) provides a novel cascading U-Nets architecture with multi-scale dense processing, named Dense Dense U-Net (DDUNet). The multi-scale dense processing connects the feature maps in each level cross cascading U-Nets, which has several compelling advantages: they alleviate the vanishing gradient problem, strengthen feature propagation and encourage feature reuse.

### SUMMARY

Based on this, there is a need to provide, with respect to the above technical problems, an image noise reduction processing method and apparatus, a device, a storage medium, and a program product that can meet the real-time requirements of the ISP chip and be used for noise reduction of video images.

In a first aspect, the present application provides an image noise reduction processing method. The method includes:
inputting target image data into an image noise reduction model to obtain noise-reduced image data outputted by the image noise reduction model, the target image data including pixel values of each channel of the target image; wherein the image noise reduction model includes a down-sampling model, an up-sampling model, and an output layer that are cascaded, the down-sampling model includes n cascaded down-sampling modules, and the up-sampling model includes n cascaded up-sampling modules that are in one-to-one correspondence with the n down-sampling modules; each down-sampling module include a first down-sampling module, a second down-sampling module, and a fusion module cascaded with the first down-sampling module and the second down-sampling module; the first down-sampling module includes a first convolution layer and a first down-sampling layer, and the second down-sampling module includes a second down-sampling layer.

In a second aspect, the present application further provides an image noise reduction processing apparatus. The apparatus includes:
a noise reduction module configured to input target image data into an image noise reduction model to obtain noise-reduced image data outputted by the image noise reduction model, the target image data including pixel values of each channel of the target image;
wherein the image noise reduction model includes a down-sampling model, an up-sampling model and an output layer that are cascaded, the down-sampling model includes n cascaded down-sampling modules, and the up-sampling model includes n cascaded up-sampling modules that are in one-to-one correspondence with the n down-sampling modules; the down-sampling modules include a first down-sampling module, a second down-sampling module, and a fusion module cascaded with the first down-sampling module and the second down-sampling module; the first down-sampling module includes a first down-sampling layer and a first convolution layer that are cascaded, and the second down-sampling module includes a second down-sampling layer.

In a third aspect, the present application further provides an electronic device, including a memory and a processor, the memory storing a computer program, wherein the processor, when executing the computer program, implements steps of the method in any one of the embodiments in the first aspect.

In a fourth aspect, the present application further provides a computer-readable storage medium, having a computer program stored therein. When the computer program is executed by a processor, steps of the method in any one of the embodiments in the first aspect are implemented.

In a fifth aspect, the present application further provides a computer program product, having a computer program stored therein. When the computer program is executed by a processor, steps of the method in any one of the embodiments in the first aspect are implemented.

According to the image noise reduction processing method and apparatus, the device, the storage medium, and the program product above, target image data including pixel values of channels of a target image can be directly inputted into the image noise reduction model, and noise-reduced image data outputted by the image noise reduction model can be obtained so as to achieve noise reduction of the target image. Generally, in an ISP chip, noise reduction is required to be performed based on a pixel value of a Y channel and pixel values of UV channels of a YUV image to obtain image data after noise reduction. Since the Y channel and the UV channels are processed at the same time, image data is required to be called repeatedly, which results in poor processing efficiency and cannot meet the real-time requirements of the ISP chip. In the present application, since the target image data including the pixel values of the channels of the target image can be directly inputted into the image noise reduction model for noise reduction, that is, noise reduction is performed on the data of all the channels of the target image at the same time, compared with noise reduction performed on the channels separately, a data volume and a computational load are greatly reduced, which can effectively improve data processing efficiency and meet real-time requirements. Moreover, during the noise reduction, information between the channels in the target image can be referenced with each other to achieve a better noise reduction processing effect. The image noise reduction model has a simplified network structure, including a down-sampling model, an up-sampling model and an output layer that are cascaded, the down-sampling model includes n cascaded down-sampling modules, and the up-sampling model includes n cascaded up-sampling modules that are in one-to-one correspondence with the n down-sampling modules; the down-sampling modules include a first down-sampling module, a second down-sampling module, and a fusion module cascaded with the first down-sampling module and the second down-sampling module; the first down-sampling module includes a first down-sampling layer and a first convolution layer that are cascaded, and the second down-sampling module includes a second down-sampling layer. Effective noise reduction of the target image data can be achieved through the simplified image noise reduction model, so that the image noise reduction model can be fully adapted to the ISP chip to perform noise reduction on real-time video images.

### BRIEF DESCRIPTION OF THE DRAWINGS

In order to more clearly illustrate the technical solutions in embodiments of the present application or the conventional art, the accompanying drawings used in the description of the embodiments or the conventional art will be briefly introduced below. It is apparent that, the accompanying drawings in the following description are only some embodiments of the present application, and other drawings can be obtained by those of ordinary skill in the art from the provided drawings without creative efforts.
FIG. 1 is a schematic structural diagram of an image noise reduction model according to an embodiment;
FIG. 2 is a schematic structural diagram of a parallel multi-convolution module according to an embodiment;
FIG. 3 is a schematic diagram of a conventional image processing procedure of an ISP chip according to an embodiment;
FIG. 4 is a schematic diagram of a first improved image processing procedure of an ISP chip according to an embodiment;
FIG. 5 is a schematic flowchart of a second improved image processing procedure of an ISP chip according to an embodiment;
FIG. 6 is a schematic flowchart of noise reduction according to an embodiment;
FIG. 7 is a schematic structural diagram of a noise reduction neural network according to an embodiment;
FIG. 8 is a schematic structural diagram of another image noise reduction model according to an embodiment;
FIG. 9 is a schematic structural diagram of another noise reduction neural network according to an embodiment;
FIG. 10 is a schematic diagram of element-wise fusion according to an embodiment;
FIG. 11 is a schematic diagram of fusion by channel concatenation according to an embodiment;
FIG. 12 is a structural block diagram of an image noise reduction processing apparatus according to an embodiment; and
FIG. 13 is a diagram of an internal structure of a computer device according to an embodiment.

### DETAILED DESCRIPTION

The technical solutions in the embodiments of the present application will be described clearly and completely below with reference to the accompanying drawings in the embodiments of the present application. The described embodiments are merely some of rather than all of the embodiments of the present application. All other embodiments obtained by those of ordinary skill in the art without creative efforts based on the embodiments of the present application shall fall within the protection scope of the present application.

In the field of image processing, image noise reduction has always been a challenging task that is difficult to handle perfectly in image processing. Image noise reduction is one of image restoration technologies, with a purpose of accurately finding signal values or noise values in an image, i.e., separating a signal part from a noise part in the image.

Currently, image noise reduction algorithms mainly include conventional algorithms and neural-network-based algorithms. The conventional algorithms have poor noise reduction effects and cannot meet the requirement of the noise reduction effect. The neural-network-based algorithms are computationally intensive and are not friendly to existing chips, which cannot meet the real-time requirements of the ISP chip.

Conventional image noise reduction may be classified into spatial domain noise reduction, frequency domain noise reduction, and spatial-frequency domain combined noise reduction according to feature spaces of separated signal noise. Conventional image noise reduction may also be classified into local noise reduction and non-local noise reduction according to image ranges used in noise reduction. Specifically, conventional noise reduction includes mean filtering, median filtering, Gaussian filtering, bilateral filtering, non-local mean filtering, guided filtering, discrete cosine domain filtering, wavelet transform domain filtering, and the like. Conventional noise reduction methods are all based on simple assumptions of statistical differences in signal and noise features, and use a fixed set of manners to separate signals from noise. Since the assumptions about the noise features are excessively simple, part of the signals may be mixed in when the noise is separated, or the noise may not be separated thoroughly enough, leaving noise residue. In actual scenes, especially when noise is significant (such as low-light environment imaging), the noise reduction effect is poor.

In recent years, in addition to conventional image noise reduction algorithms, various neural-network-based image noise reduction algorithms have greatly improved the image noise reduction effect. Several representative networks of such neural networks include a linear denoising convolutional neural network (DnCNN), a convolutional blind denoising network (CBDNet) including a sub-network for evaluating noise levels, an attention-mechanism-based real image denoising network (RIDNet, feature-attention-based real image denoising), and the like. The neural-network-based image noise reduction algorithms have an advantage that the noise reduction effect is more significantly improved than that of the conventional algorithm, but have a corresponding disadvantage that the calculation amount is far more than that of the conventional algorithm, making it difficult to implement in practical applications, especially on ISP chips that have high real-time requirements.

In view of this, in embodiments of the present application, an image noise reduction processing method that meets the real-time requirements of the ISP chip and can better perform noise reduction on video images is provided.

In an embodiment, an image noise reduction processing method is provided. In the embodiments of the present application, the method will be illustrated by taking the application of the method to a terminal including an ISP chip as an example. It may be understood that the method is also applicable to a server, and is further applicable to a system including a terminal and a server and is implemented by interaction between the terminal and the server. Specifically, the method may be performed by the ISP chip in the terminal. The terminal may be, but is not limited to, various computer devices or shooting devices, and the server may be implemented as an independent server or a server cluster including a plurality of servers.

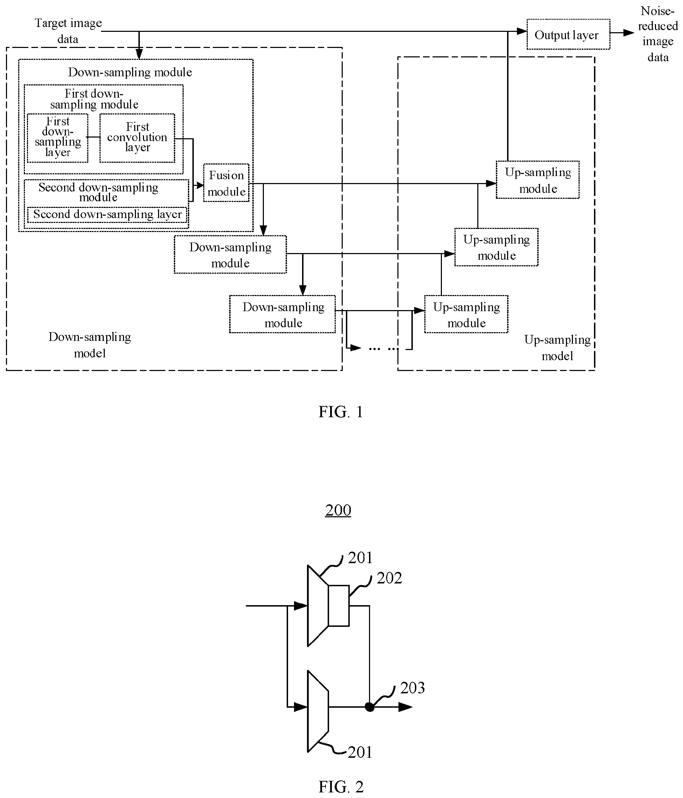

In the embodiments of the present application, the method includes: inputting target image data into an image noise reduction model to obtain noise-reduced image data outputted by the image noise reduction model, the target image data including pixel values of each channel of the target image. As shown in FIG. 1 which is a schematic structural diagram of an image noise reduction model according to embodiments of the present application, the image noise reduction model includes a cascaded down-sampling model, up-sampling model and output layer. The down-sampling model includes n cascaded down-sampling modules, and the up-sampling model includes n cascaded up-sampling modules that are in one-to-one correspondence with the n down-sampling modules. Each down-sampling module includes a first down-sampling module, a second down-sampling module, and a fusion module cascaded with the first down-sampling module and the second down-sampling module. The first down-sampling module includes a first down-sampling layer and a first convolution layer that are cascaded, and the second down-sampling module includes a second down-sampling layer.

The ISP chip is configured to acquire an image captured by a front-end image sensor of the terminal, perform a series of image processing, and output a processed image. Generally, a step of processing, by the ISP chip, an image in a RAW format from the image sensor includes: performing defect pixel correction, dark current correction, lens shading correction, RAW image noise reduction, white balance, color interpolation, and the like on a RAW image to obtain an RGB image, then performing Gamma correction, color correction, RGB image to YUV image conversion, and the like to obtain a YUV image, performing processing such as noise reduction, edge enhancement, and brightness/contrast/hue/saturation adjustment on the YUV image, and finally encoding image data to obtain a video image finally outputted. Optionally, the image processed by the ISP chip may be a single image or a video image formed by consecutive frames. Various image processing algorithms may be integrated into the ISP chip to implement the above image processing steps performed by the ISP chip. In the embodiments of the present application, the image noise reduction model is an algorithm applied to the ISP chip to implement the image noise reduction processing steps.

It is to be noted that in FIG. 1, only three down-sampling modules and three up-sampling modules are used as examples, which are not used to limit the present application.

In the embodiments of the present application, the target image is an image in the ISP chip on which noise reduction is required to be performed, and the target image data is pixel values of channels of the target image. If the front-end image sensor acquires a single image, the target image is the single image. If the front-end image processor acquires a real-time video image, the target image is a single-frame image in the real-time video image.

Optionally, the target image may be in a RAW format, an RGB format, or a YUV format, which is not specifically limited in the embodiments of the present application.

The image noise reduction model may perform different processing according to whether the resolution of image data of the channels of the target image to be processed is consistent. Specifically, for a target image in which resolution of image data of the channels is consistent, the image noise reduction model is single-input single-output, and may directly perform noise reduction on inputted target image data. For a target image in which resolution of image data of the channels is inconsistent, the image noise reduction model is multi-input multi-output, and image data of different channels in the target image data may be respectively inputted into the image noise reduction model for noise reduction. As a result, the image noise reduction model can be adapted to perform noise reduction on various types of target images.

Today, image noise reduction includes single-image noise reduction and joint noise reduction of multi-image. Considering the computational load and data cache of the ISP chip, single-image noise reduction is more suitable for real-time processing scenarios than joint noise reduction of multi-image. Based on the actual noise reduction effect, computational complexity of networks, and data reading/writing volume, etc., in the embodiments of the present application, a very simplified single-image noise reduction network structure, that is, the image noise reduction model, is proposed by optimizing a network structure and computing units of a U-Net network. A main body of the image noise reduction model is the U-Net network. The down-sampling model of the image noise reduction model is configured to down-sample the target image data. The up-sampling model is configured to up-sample feature data obtained after up-sampling. The output layer is configured to output noise-reduced image data corresponding to the target image based on data outputted by the up-sampling model and the target image data. Input of each up-sampling module is output data of the previous up-sampling module and output data of a down-sampling module corresponding to the up-sampling module. As a result, deep-layer and shallow-layer image features can be fused to improve the noise reduction effect.

The down-sampling model includes n cascaded down-sampling modules. Each down-sampling module is a parallel multi-convolution module and is configured to extract more image features. In order to have a clearer understanding of the parallel multi-convolution module, FIG. 2 shows a schematic structural diagram of a parallel multi-convolution module according to embodiments of the present application, for example, the parallel multi-convolution module includes two down-sampling layers 201, a convolution layer 202, and a fusion layer 203. Optionally, the parallel multi-convolution module 200 may further include other numbers of down-sampling layers and convolution layers, which is not specifically limited in the embodiments of the present application. In other words, correspondingly, in addition to the first convolution layer, the first down-sampling layer, and the second down-sampling layer, the down-sampling module may further include other numbers of convolution layers and down-sampling layers, which may specifically be determined based on parameters such as computing power and bandwidth of the ISP chip and is not specifically limited in the embodiments of the present application. It is to be noted that the image noise reduction model, by including the down-sampling module of the structure provided in the embodiments of the present application, can achieve a better down-sampling effect, and can also meet the real-time requirements of the ISP chip while ensuring the noise reduction effect.

Correspondingly, numbers of the down-sampling module and the up-sampling module in the image noise reduction model may be determined based on parameters such as computing power and bandwidth of the ISP chip, which is not specifically limited in the embodiments of the present application.

Optionally, channel fusion of the fusion module in the down-sampling module may be performed in an element-wise manner or by channel concatenation, which is not specifically limited in the embodiments of the present application.

According to the above image noise reduction processing method, target image data including pixel values of channels of a target image can be directly inputted into the image noise reduction model to obtain noise-reduced image data outputted by the image noise reduction model, achieving noise reduction of the target image. Generally, in an ISP chip, noise reduction is required to be performed based on a pixel value of a Y channel and pixel values of UV channels of a YUV image to obtain noise-reduced image data. Since the Y channel and the UV channels are processed at the same time, image data is required to be called repeatedly, which results in poor processing efficiency and cannot meet the real-time requirement of the ISP chip. In the present application, since the target image data including the pixel values of each of the channels of the target image can be directly inputted into the image noise reduction model for noise reduction, that is, noise reduction is performed on the data of each of the channels of the target image at the same time, compared with noise reduction performed on the channels separately, a data volume and a computational load are greatly reduced, which can effectively improve data processing efficiency and meet the real-time requirements. Moreover, during the noise reduction, information between the channels in the target image can be referenced with each other to achieve a better noise reduction processing effect. The image noise reduction model has a simplified network structure, including a cascaded down-sampling model, up-sampling model and output layer, the down-sampling model includes n cascaded down-sampling modules, and the up-sampling model includes n cascaded up-sampling modules that are in one-to-one correspondence with the n down-sampling modules. Each down-sampling module includes a first down-sampling module, a second down-sampling module, and a fusion module cascaded with the first down-sampling module and the second down-sampling module. The first down-sampling module includes a first down-sampling layer and a first convolution layer, and the second down-sampling module includes a second down-sampling layer. Effective noise reduction of the target image data can be achieved through a simplified image noise reduction model, so that the image noise reduction model can be fully adapted to the ISP chip to perform noise reduction on real-time video images.

In an embodiment, the image noise reduction model is used in a RAW image noise reduction module, an RGB image noise reduction module, or a YUV image noise reduction module in an ISP chip, and correspondingly, a format of the target image is a RAW format, an RGB format, or a YUV format.

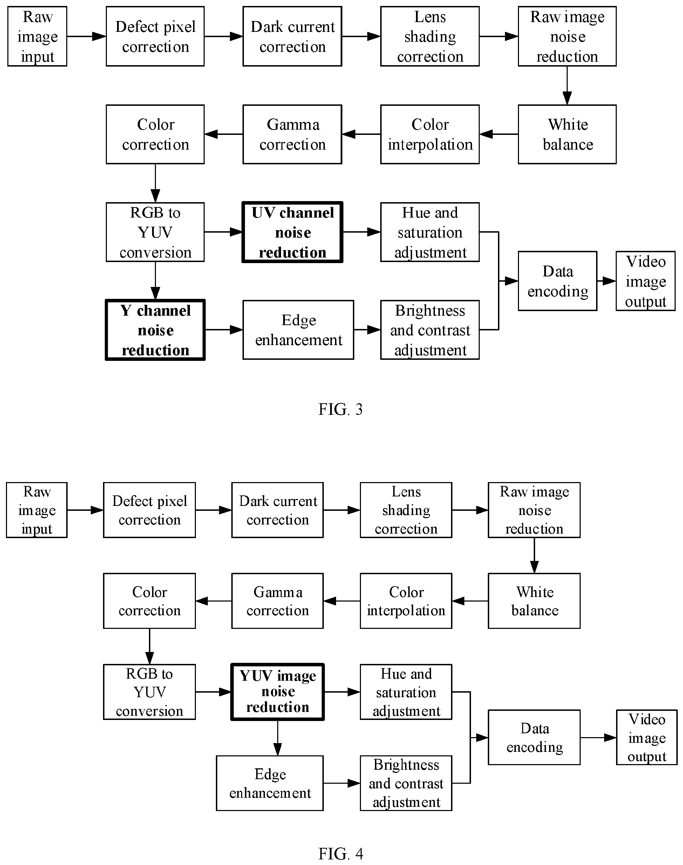

Referring to FIG. 3, which is a schematic diagram of a conventional image processing procedure of an ISP chip according to embodiments of the present application, the conventional processing process of the ISP chip includes: acquiring a RAW image corresponding to each frame in a video image transmitted by a front-end image sensor, performing defect pixel correction, dark current correction, lens shading correction, RAW image noise reduction, white balance, color interpolation, and the like to obtain an RGB image, performing Gamma correction, color correction, RGB to YUV conversion, and the like to obtain a YUV image, performing noise reduction, edge enhancement, and brightness/contrast/hue/saturation adjustment on Y (brightness) channel data of the YUV image, performing hue/saturation adjustment on UV (color) channel data of the YUV image to achieve noise reduction on the YUV image, and performing data coding on the noise-reduced YUV image to obtain a video image finally outputted.

The RAW image is an image sensor acquisition format, which is essentially a special RGB format. The RAW image undergoes a series of processing and then undergoes color interpolation to obtain a common RGB image, which is then converted to a YUV image after a series of processing. The YUV image format is a format that separates brightness and color of an image. The brightness is represented by the Y channel, and the color is represented by the UV channels. In the processing on the YUV image, the Y channel and the UV channels may be processed separately. Noise reduction algorithms may be used for the Y (brightness) channel and the UV (color) channels respectively. Then, edge enhancement, brightness adjustment, and contrast adjustment are performed on the brightness component, and hue adjustment and saturation adjustment are performed on the color component.

Since conventional processing of the ISP chip requires processing the channels of the YUV image separately, the image data of each channel is required to be repeatedly read and written for processing, resulting in a poor noise reduction effect and low processing efficiency. Based on this, in the embodiments of the present application, the image noise reduction model is applied to the ISP chip, which may directly perform noise reduction on the RGB image, the RAW image, or the YUV image. For example, if the image noise reduction model is applied to the RAW image noise reduction module in the ISP chip, the format of the corresponding target image is the RAW format. If the image noise reduction model is applied to the RGB image noise reduction module in the ISP chip, the format of the corresponding target image is the RGB format. If the image noise reduction model is applied to the YUV image noise reduction module in the ISP chip, the format of the corresponding target image is the YUV format.

The process of noise reduction on the channels of the YUV image separately in the conventional art is replaced, so as to improve the noise reduction effect and processing efficiency.

In one case, referring to FIG. 4 which is a schematic diagram of a first improved image processing procedure of the ISP chip according to embodiments of the present application, the image noise reduction model is applied to the YUV image noise reduction module in the ISP chip to directly perform noise reduction on data of all of the channels of a YUV image. In this case, the target image data inputted into the image noise reduction model is pixel values of all the channels of the YUV image. As a result, the noise reduction effect and processing efficiency of the YUV image can be greatly improved. In scenarios of processing real-time video images, the processing efficiency of the image noise reduction model is even more significant.

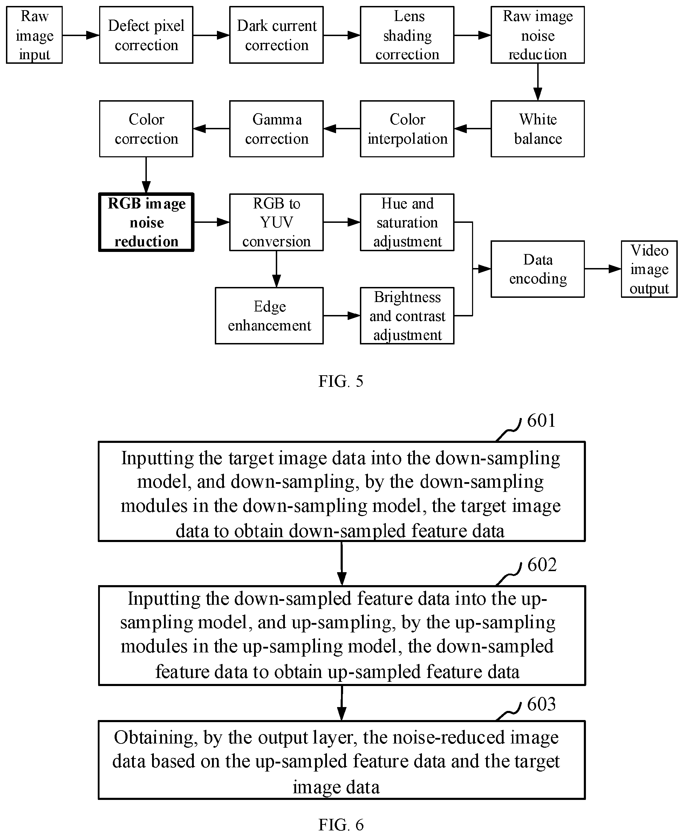

In another case, referring to FIG. 5 which is a schematic diagram of a second improved image processing procedure of the ISP chip according to embodiments of the present application, the image noise reduction model is applied to the RGB image noise reduction module in the ISP chip to directly perform noise reduction on data of all of the channels of an RGB image, and then the ISP chip may directly convert the RGB image obtained by noise reduction to obtain a YUV image and perform subsequent processing, without performing noise reduction on separate channels of the YUV image again, thereby improving efficiency of image noise reduction processing. In this case, the target image data inputted into the image noise reduction model is pixel values of all the channels of the RGB image.

Optionally, the image noise reduction model may also be applied to the RAW image noise reduction module in the ISP chip to directly perform noise reduction on a RAW image. Correspondingly, in this case, the target image data inputted into the image noise reduction model is pixel values of all the channels of the RAW image.

In the embodiments of the present application, the conventional noise reduction module in the ISP chip is slightly adjusted to combine brightness noise reduction and color noise reduction to achieve overall noise reduction processing through the image noise reduction model, which can improve a capability to extract image signals during noise reduction processing, increase signal-to-noise ratio, and improve a subjective noise reduction effect. For the YUV image, when respective channels (Y, U, V) of the image are noise-reduced, information between the channels can be referred to each other, so as to achieve a better noise reduction effect. In addition, the actual computational load and data reading/writing volume in the case of merging channels for processing are less than the sum of that in the case of processing on separate channels. Therefore, merging image channels for processing has positive benefits in terms of performance and effect. Therefore, applying the image noise reduction model to the ISP chip for image noise reduction processing meets the requirements of the ISP chip in terms of both noise reduction effect and real-time performance.

The specific processing process of the target image data by the image noise reduction model will be described below.

In an embodiment, as shown in FIG. 6, which is a schematic flowchart of noise reduction processing according to embodiments of the present application, inputting the target image data into the image noise reduction model to obtain the noise-reduced image data outputted by the image noise reduction model includes the following steps.

In step 601, the target image data is inputted into the down-sampling model, and the down-sampling modules in the down-sampling model down-sample the target image data, to obtain down-sampled feature data.

In step 602, the down-sampled feature data is inputted into the up-sampling model, and the up-sampling modules in the up-sampling model up-sample the down-sampled feature data, to obtain up-sampled feature data.

In step 603, the output layer obtains the noise-reduced image data based on the up-sampled feature data and the target image data.

The down-sampling model includes n cascaded down-sampling modules. Optionally, a value of n may be designed based on actual operation and storage of the chip, thereby determining structures of the down-sampling model and the up-sampling model. Numbers of the up-sampling module and the down-sampling module are not specifically limited in the embodiments of the present application. It can be understood that the number of up-sampling modules should be consistent with the number of down-sampling modules.

Each down-sampling module is configured to down-sample the input data to extract more image features. After the down-sampling, the image is reduced. Correspondingly, the up-sampling module is used to perform up-sampling to restore the size of the image.

The last module of the n cascaded down-sampling modules outputs the down-sampled feature data, and the last module in the n cascaded up-sampling modules outputs the up-sampled feature data.

The up-sampled feature data and the target image data are inputted into the output layer for fusion, and the noise-reduced image data can be obtained based on the data outputted by the output layer.

Currently, almost all single-image denoising algorithms are difficult to run in real time on the ISP chip. In the present application, by simplifying the network structure and constructing a lightweight neural network model suitable for the operation of the chip, the image noise reduction model is obtained, so that the single-image denoising algorithm can be applied to the ISP chip for real-time noise reduction and meet the requirements of the image noise reduction effect and the real-time performance of the algorithm, which solves the problem of deployment and real-time running of the neural network on the chip, and achieves a more significantly improved noise reduction effect than the conventional chip.

Specifically, processes of inputting target image data corresponding to different types of target images into the image noise reduction model for processing are also different. Processes of processing target image data corresponding to two types of target images are described below respectively.

In one case, the target image is an image in a format in which image data resolution of respective channels is the same, such as a target image in a RAW format, an RGB format, or a YUV444 format. In this case, the down-sampling, by the down-sampling modules in the down-sampling model, the target image data, to obtain down-sampled feature data includes:
for an i^{th} down-sampling module, down-sampling input data of the i^{th} down-sampling module to obtain intermediate down-sampled feature data outputted by the i^{th} down-sampling module; and taking intermediate down-sampled feature data outputted by the last down-sampling module as the down-sampled feature data. When i=1, the input data of the i^{th} down-sampling module is the target image data, and when i is greater than 1, the input data of the i^{th} down-sampling module is intermediate down-sampled feature data outputted by the i-1^{th} down-sampling module.

In the ISP chip, images are stored in different data formats (such as RAW, RGB, YUV444, and YUV420) in different modules. If input and output of the image noise reduction model are in formats in which resolution of each of the channels is the same such as RAW, RGB, and YUV444, for the first down-sampling module, the target image data as a whole is taken as the input of the first down-sampling module, and for other down-sampling modules, intermediate down-sampled feature data outputted by the previous down-sampling module is taken as the input data of the down-sampling module. Each down-sampling module is configured to extract image features to obtain intermediate down-sampled feature data.

Correspondingly, in an embodiment, up-sampling, by the up-sampling modules in the up-sampling model, the down-sampled feature data to obtain up-sampled feature data includes:
for an i^{th} up-sampling module, up-sampling input data of the i^{th} up-sampling module to obtain intermediate up-sampled feature data outputted by the i^{th} up-sampling module; and taking intermediate up-sampled feature data outputted by the last up-sampling module as the up-sampled feature data. When i=1, input data of the i^{th} up-sampling module is the down-sampled feature data, and when i is greater than 1, input data of the i^{th} up-sampling module is aggregated feature data obtained by fusing intermediate up-sampled feature data outputted by the i-1^{th} up-sampling module and intermediate down-sampled feature data outputted by the down-sampling module corresponding to the i^{th} up-sampling module.

For the first up-sampling module, the down-sampled feature data is taken as input of the first up-sampling module. For other up-sampling modules, intermediate up-sampled feature data outputted by a previous up-sampling module and intermediate down-sampled feature data outputted by the down-sampling module corresponding to the up-sampling module are fused to obtain aggregated feature data, and the aggregated feature data is taken as input data of the up-sampling module. As a result, deep-layer features, shallow-layer features, and features of different resolution in the target image data can be fully fused to improve the noise reduction processing effect.

Correspondingly, in an embodiment, obtaining, by the output layer, the noise-reduced image data based on the up-sampled feature data and the target image data includes: inputting the up-sampled feature data and the target image data into the output layer for fusion to obtain the noise-reduced image data outputted by the output layer.

Specifically, the output layer is mainly configured to fuse the input data. In other words, the output layer and the fusion module in the down-sampling module are both configured for feature fusion. Optionally, the output layer may simply process the input data in an element-wise manner or by channel superposition to achieve fusion.

After a series of processing, the up-sampled feature data outputted by the last up-sampling module includes noise feature data of the target image. By fusing the target image data with the up-sampled feature data, noise features can be removed from the target image data, and the output layer outputs the noise-reduced image data with the noise feature data removed, achieving noise reduction of the target image. That is, the entire image noise reduction model actually outputs noise residual, and then the noise residual and the target image are superimposed in the output layer to obtain a noise-reduced image outputted by the output layer.

Optionally, the up-sampling module may be formed by cascaded convolution layers and up-sampling layers.

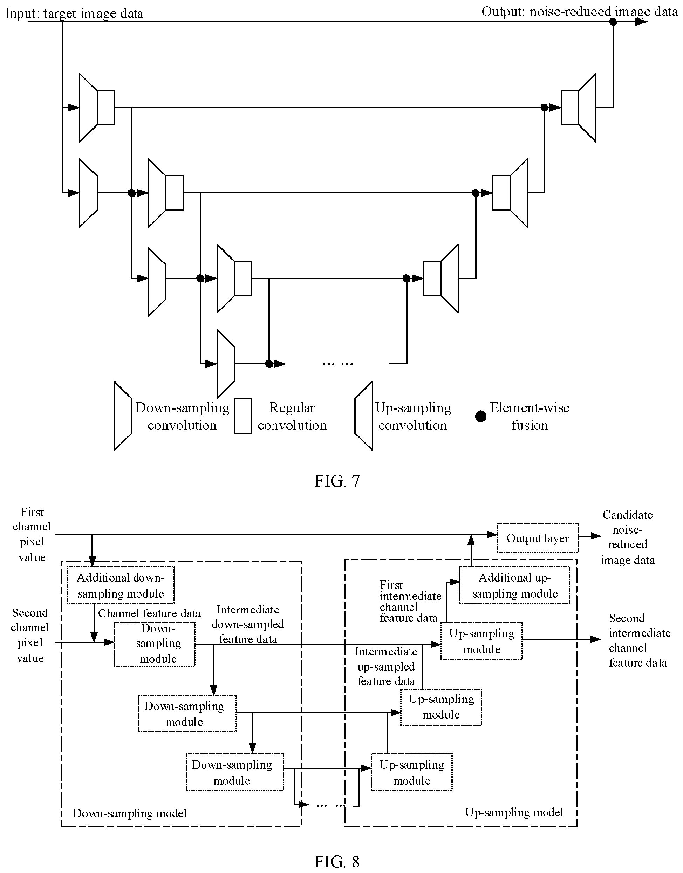

Based on the content hereinabove, a single-input single-output image noise reduction model provided in embodiments of the present application may be obtained. FIG. 7 shows a schematic structural diagram of a noise reduction neural network according to embodiments of the present application. For example, the image noise reduction model shown in FIG. 7 includes three down-sampling modules and three up-sampling modules. If the fusion modules and other fusion processing in the output layer and the down-sampling module are based on element-wise fusion, the down-sampling layer and the up-sampling layer can achieve down-sampling or up-sampling by convolution.

As can be seen, the image noise reduction model based on a U-net network structure provided in the embodiments of the present application has a simple structure and directly performs noise reduction on the data of all channels of the image as a whole, ensuring a good denoising effect and high processing efficiency.

In the case that a neural network framework and a basic computing unit structure remain unchanged, the number of down-sampling modules and up-sampling modules can be modified according to actual computing power and bandwidth limitations, which can appropriately improve the noise reduction effect. In FIG. 7, three times of down-sampling and three times of up-sampling are taken as an example. In fact, the number of times of down-sampling and up-sampling may be increased (such as 4 times or 5 times) or reduced (such as 2 times). Channel fusion may be performed in an element-wise manner or by channel concatenation.

In another case, the target image is an image in a format in which image data resolution of channels is different, for example, a target image in a format such as YUV420. In this case, the down-sampling model in the image noise reduction model further includes an additional down-sampling module. The up-sampling model in the image noise reduction model further includes an additional up-sampling module. Referring to FIG. 8, a schematic structural diagram of another image noise reduction model according to embodiments of the present application is provided.

Correspondingly, inputting the target image data into the down-sampling model, and down-sampling, by the down-sampling modules in the down-sampling model, the target image data to obtain the down-sampled feature data includes:
inputting a first channel pixel value of the target image included in the target image data into the additional down-sampling module to obtain channel feature data outputted by the additional down-sampling module; fusing the channel feature data with a second channel pixel value of the target image included in the target image data to obtain candidate target image data as input data of the first down-sampling module; for an i^{th} down-sampling module, down-sampling input data of the i^{th} down-sampling module to obtain intermediate down-sampled feature data outputted by the i^{th} down-sampling module; and taking intermediate down-sampled feature data outputted by the last down-sampling module as the down-sampled feature data.

When i=1, the input data of the i^{th} down-sampling module is the candidate target image data, and when i is greater than 1, the input data of the i^{th} down-sampling module is intermediate down-sampled feature data outputted by the i-1^{th} down-sampling module.

In the ISP chip, images are stored in different data formats (such as RAW, RGB, YUV444, and YUV420) in different modules. If the image noise reduction model is embedded into a position in the chip where resolution of channels of the image in an input-output format of YUV420 is inconsistent, a multi-input multi-output network structure is required to be used, that is, the structure in FIG. 8.

Specifically, for a target image with different resolution for channels, target image data corresponding to the target image includes a first channel pixel value and a second channel pixel value. Taking a target image in the YUV420 format as an example, the first channel pixel value is a Y channel pixel value, and the second channel pixel value is a UV channel pixel value. Since the resolution is different, the first channel pixel value, i.e., the Y channel pixel value, is required to be down-sampled in advance by the additional down-sampling module. Channel feature data outputted by the additional down-sampling module may have same resolution as the second channel pixel value, i.e., the UV channel pixel value. In this case, the channel feature data and the second channel pixel value may be directly fused and the down-sampling modules may be used to perform normal down-sampling.

Correspondingly, in an embodiment, inputting the down-sampled feature data into the up-sampling model, and up-sampling, by the up-sampling modules in the up-sampling model, the down-sampled feature data to obtain up-sampled feature data includes:
for an i^{th} up-sampling module, up-sampling input data of the i^{th} up-sampling module to obtain intermediate up-sampled feature data outputted by the i^{th} up-sampling module; and inputting first intermediate channel feature data corresponding to the first channel pixel value and included in intermediate up-sampled feature data outputted by the last up-sampling module into the additional up-sampling module to obtain the up-sampled feature data outputted by the additional up-sampling module.

When i=1, the input data of the i^{th} up-sampling module is the down-sampled feature data, and when i is greater than 1, the input data of the i^{th} up-sampling module is aggregated feature data obtained by fusing intermediate up-sampled feature data outputted by the i-1^{th} up-sampling module and intermediate down-sampled feature data outputted by the down-sampling module corresponding to the i^{th} up-sampling module. As a result, deep-layer features, shallow-layer features, and features of different resolution in the target image data can be fully fused to improve the noise reduction processing effect.

Corresponding to the target image data including the first channel pixel value and the second channel pixel value, the noise-reduced image data outputted by the image noise reduction model should also include noise-reduced image data of different channels with different resolution.

For the up-sampling modules, like the image noise reduction model above, each up-sampling module up-samples input data to obtain intermediate up-sampled feature data outputted by the last up-sampling module. In this case, the intermediate up-sampled feature data outputted by the last up-sampling module includes first intermediate channel feature data and second intermediate channel feature data. The first intermediate channel feature data corresponds to the first channel pixel value, i.e., Y channel image data. In other words, the first intermediate channel feature data is obtained after performing noise reduction on the first channel pixel value. Correspondingly, the second intermediate channel feature data is obtained after performing noise reduction on the second channel pixel value.

Since the first channel pixel value is down-sampled by the additional down-sampling module, correspondingly, the first intermediate channel feature data is further required to be up-sampled by the additional up-sampling module, so as to take output of the additional up-sampling module as up-sampled feature data finally outputted by the up-sampling model. As a result, the output layer performs further fusion based on the up-sampled feature data and the first channel pixel value in the target image data.

Correspondingly, in an embodiment, obtaining, by the output layer, the noise-reduced image data based on the up-sampled feature data and the target image data includes: inputting the up-sampled feature data and the first channel pixel value in the target image data into the output layer for fusion to obtain candidate noise-reduced image data outputted by the output layer. The noise-reduced image data is obtained based on the candidate noise-reduced image data and second intermediate channel feature data that corresponds to the second channel pixel value and is included in the intermediate up-sampled feature data outputted by the last up-sampling module.

Specifically, after a series of processing, the up-sampled feature data includes noise features corresponding to the first channel pixel value, that is, noise residual of the target image is extracted. The up-sampled feature data and the first channel pixel value are fused by the output layer, that is, the noise residual and the target image are superimposed in the output layer, which can remove noise features in the first channel pixel value to obtain the candidate noise-reduced image data outputted by the output layer.

The noise-reduced image data can be obtained based on the candidate noise-reduced image data and second intermediate channel feature data included in the intermediate up-sampled feature data outputted by the last up-sampling module.

Therefore, for an image with different resolution for channels, the multi-input multi-output image noise reduction model can also achieve noise reduction, expanding the application of the ISP chip.

Optionally, the additional down-sampling module includes cascaded down-sampling layers and convolution layers, and the additional up-sampling module includes cascaded convolution layers and up-sampling layers.

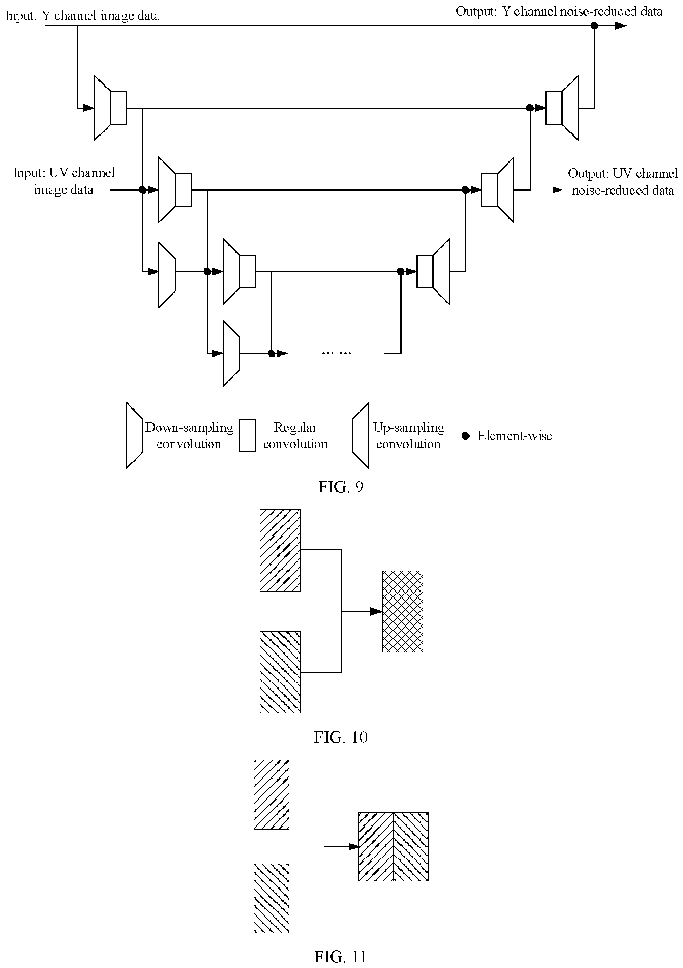

Based on the content hereinabove, a schematic structural diagram of the multi-input multi-output image noise reduction model provided in the embodiments of the present application may be obtained. FIG. 9 shows a schematic structural diagram of another noise reduction neural network according to embodiments of the present application. For example, the image noise reduction model shown in FIG. 9 includes two down-sampling modules and two up-sampling modules. If the fusion modules and other fusion processing in the output layer and the down-sampling module are based on element-wise fusion, the down-sampling layer and the up-sampling layer can achieve down-sampling and up-sampling by convolution, respectively.

In the embodiments of the present application, an image noise reduction processing module serves as an important module in the ISP chip, and its input and output formats and data arrangement should be consistent with those of the noise reduction processing module in the conventional ISP chip, so as to reduce changes in original layout of the ISP chip and speed up the application process. Therefore, in the embodiments of the present application, a multi-input multi-output noise reduction neural network is provided, replacing the conventional noise reduction module without significantly modifying the layout of the ISP chip. Compared with the conventional neural network, the multi-input multi-output network structure is used in the embodiments of the present application, which is embedded into the ISP chip, better solving the problem that the single-image noise reduction neural network cannot adapt to the layout and the real-time performance of the ISP chip.

Compared with the existing image processing algorithm in the ISP chip, the image noise reduction model in the embodiments of the present application can fully fuse information of respective channel pixel values in the target image data, and can better mine information in an image and eliminate noise in the image. An ISP noise reduction algorithm based on channel fusion can effectively increase a signal-to-noise ratio of the image. Compared with the conventional noise reduction algorithm, the use of the lightweight noise reduction neural network can greatly improve clarity of the image and reduce the noise. When the noise is reduced, due to the improvement of image quality, trailing noise of moving objects in the image can also be ameliorated, which can improve accuracy of subsequent image tasks such as object detection or face recognition on the target image, expanding an application range of the target image after noise reduction.

As mentioned above, each down-sampling module includes a first down-sampling module, a second down-sampling module, and a fusion module cascaded with the first down-sampling module and the second down-sampling module. The first down-sampling module includes a first convolution layer and a first down-sampling layer, and the second down-sampling module includes a second down-sampling layer. The processing process of the down-sampling module will be described below.

In an embodiment, down-sampling input data of the i^{th} down-sampling module to obtain the intermediate down-sampled feature data outputted by the i^{th} down-sampling module includes: down-sampling, by the first down-sampling layer, the input data of the i^{th} down-sampling module to obtain first down-sampled feature data outputted by the first down-sampling layer; convolving, by the first convolution layer, the first down-sampled feature data to obtain first convolution feature data outputted by the first convolution layer; down-sampling, by the second down-sampling layer, the input data of the i^{th} down-sampling module to obtain second down-sampled feature data outputted by the second down-sampling layer; and fusing, by the fusion module, the first convolution feature data and the second down-sampled feature data to obtain the intermediate down-sampled feature data outputted by the fusion module.

Optionally, the first down-sampling layer and the second down-sampling layer may implement down-sampling by convolution.

Optionally, each down-sampling module may be configured with an appropriate convolution structure. For example, the first down-sampling layer and the first convolution layer may be configured to perform convolution with a 5x5 convolution kernel, the second convolution layer may be configured to perform convolution with a 3x3 convolution kernel, and the like. It should be understood that the convolution of each layer in the down-sampling module may use any combination of direct connection, 1x1 convolution, 3x3 convolution, 5x5 convolution, 7x7 convolution, etc., which is not specifically limited in the embodiments of the present application.

The processing process of the up-sampling module will be described below.

In an embodiment, the up-sampling module includes a second convolution layer and an up-sampling layer that are cascaded. Up-sampling the input data of the i^{th} up-sampling module to obtain intermediate up-sampled feature data outputted by the i^{th} up-sampling module includes: convolving, by the second convolution layer, the input data of the i^{th} up-sampling module to obtain second convolution feature data outputted by the second convolution layer; and up-sampling, by the up-sampling layer, the second convolution feature data to obtain the intermediate up-sampled feature data outputted by the up-sampling layer.

Optionally, the up-sampling layer up-samples input data of the up-sampling layer by convolution, unpooling, or interpolation.

Optionally, each up-sampling module may also include other numbers of convolution layers and up-sampling layers, which may specifically be determined based on computing power, bandwidth, or storage energy parameters of the ISP chip.

The second convolution layer and the up-sampling layer may be configured with appropriate convolution structures, and convolution of each layer may use any combination of direct connection, 1x1 convolution, 3x3 convolution, 5x5 convolution, 7x7 convolution, etc., which is not specifically limited in the embodiments of the present application.

In an embodiment, for the fusion processing of the fusion module, the fusion processing of the output layer, and other fusion processing in the image noise reduction model above, deep-layer and shallow-layer features of the image may be fused in an element-wise manner or by channel concatenation. FIG. 10 shows a schematic diagram of element-wise fusion according to embodiments of the present application. FIG. 11 shows a schematic diagram of fusion by channel concatenation according to embodiments of the present application.

Fusion of feature channels in an element-wise manner can significantly reduce a data reading/writing volume and a computational load, but may lose some of the extracted features. If the chip has enough computing power and cache, channel concatenation may be selected. The element-wise manner is required to ensure that resolution and channel numbers of the two groups of fused features are exactly the same, while channel concatenation is not required to ensure that the channel numbers of the two groups of fused features are the same. Based on this, for different ISP chips, different channel fusion manners and up-sampling manners are selected, which have slight differences in the final noise reduction effect, but for some chips, computing time and efficiency vary greatly. Therefore, whether the fusion processing is performed in the element-wise manner or by the channel concatenation may be determined based on pre-determined image processing requirements of the ISP chip, so as to fully improve efficiency of image processing of the chip.

In an embodiment, embodiments of the present application provide a neural network noise reduction algorithm deployed on an ISP chip. A main deployment process is as follows.

In step 1, a basic structure of a U-Net neural network is built, which specifically includes determining a network framework, an input-output format (RAW, RGB, YUV444, or the like) of the network, numbers of down-sampling and up-sampling layers, and sampling rates of respective layers.

In step 2, a structure of the down-sampling module in the network structure is determined.

In step 3, a channel concatenation manner and an up-sampling manner are selected. For example, channel concatenation is performed in an element-wise manner, and up-sampling is achieved by transposed convolution.

In step 4, a specific position where the network is embedded in the image processing process of the ISP chip is determined, for example, a RAW image noise reduction module, an RGB image noise reduction module, or a YUV image noise reduction module.

In step 5, a complete neural network noise reduction algorithm is run and debugged.

Further, as described in step 1, exemplarily, the entire network may include 3 parallel multi-convolution modules for down-sampling processing, and 3 regular convolution layers and 3 up-sampling layers for up-sampling processing corresponding thereto. Prior to each down-sampling, features of original resolution are retained and fused after the corresponding up-sampling layer, so that deep-layer and shallow-layer features and features of different resolution in the image can be fully fused. The entire network includes a total of 15 convolution and up-sampling layers, and an activation layer is added after each convolution layer. As an example, if an image in a YUV format with an input size of 256x256x3 is taken as input data, sizes of output data of the 15-layer network are 128x128x16, 128x128x16, 128x128x16, 64x64x32, 64x64x32, 64x64x32, 32x32x64, 32x32x64, 32x32x64, 32x32x64, 32x32x16, 64x64x16, 64x64x16, 64x64x16, 128x128x16, 128x128x16, and 256x256x3 (output in the YUV format), respectively.

Optionally, the number of down-sampling layers in step 1 may be N, and N is greater than or equal to 1. If the ISP chip has enough computing power and cache, N may be set to 4 or a greater integer.

Optionally, the down-sampling rate in step 1 may be N: 1, and N is greater than 1. N may be set to 3, 4, or the like. Different down-sampling layers may alternatively use different sampling rates.

Optionally, the up-sampling manner in step 3 may be an unpooling or interpolation algorithm, etc. The unpooling or interpolation can effectively reduce a number of parameters in the up-sampling layer.

Compared with the existing image processing algorithm in the ISP chip, in the embodiments of the present application, information of respective channels in an image are fully fused in noise reduction processing, which can better mine information in the image and eliminate noise in the image. An ISP noise reduction algorithm based on channel fusion can effectively increase a signal-to-noise ratio of the image. Compared with the conventional noise reduction algorithm, the use of the lightweight noise reduction neural network can greatly improve clarity of the image and reduce the noise. When the noise is reduced, due to the improvement of image quality, trailing noise of moving objects in the image can also be ameliorated, which can improve accuracy of subsequent image tasks such as target detection or face recognition. Compared with the common noise reduction neural network, the neural network used in the embodiments of the present application improves the network structure and basic operators, and can run on the ISP chip better in real time, thereby solving the problem that the common neural network cannot run on mobile devices in real time. Compared with the common neural network, the multi-input multi-output network structure is used in the embodiments of the present application, which is embedded in the image processing flow of the ISP chip and better solves the problem that the single-image noise reduction neural network cannot adapt to the image processing flow of the ISP chip.

It should be understood that, although the steps in the flowcharts as referred to in the embodiments above are displayed in sequence as indicated by the arrows, the steps are not necessarily performed in the order indicated by the arrows. Unless otherwise clearly specified herein, the steps are performed without any strict sequence limitation, and may be performed in other orders. In addition, at least some steps in the flowcharts as referred to in the embodiments above may include a plurality of steps or a plurality of stages, and such steps or stages are not necessarily performed at a same moment, and may be performed at different moments. The steps or stages are not necessarily performed in sequence, and the steps or stages and at least some of other steps or steps or stages of other steps may be performed in turn or alternately.

Based on the same inventive concept, embodiments of the present application further provide an image noise reduction processing apparatus configured to implement the image noise reduction processing method as described above. An implementation solution for solving the problems that is provided by the apparatus is similar to the implementation solution of the above method. Therefore, for specific features in one or more embodiments of the image noise reduction processing apparatus provided below, reference may be made to the features on the above image noise reduction processing method. Details are not described herein again.

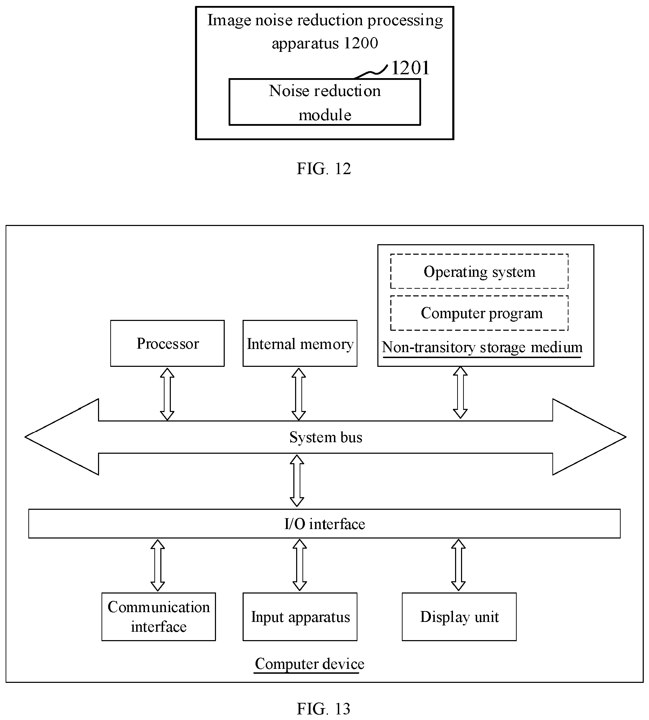

In an embodiment, as shown in FIG. 12, an image noise reduction processing apparatus is provided. The image noise reduction processing apparatus 1200 includes a noise reduction module 1201.

The noise reduction module 1201 is configured to input target image data into an image noise reduction model to obtain noise-reduced image data outputted by the image noise reduction model, the target image data including pixel values of each channel of the target image. The image noise reduction model includes a cascaded down-sampling model, up-sampling model and output layer, the down-sampling model includes n cascaded down-sampling modules, and the up-sampling model includes n cascaded up-sampling modules that are in one-to-one correspondence with the n down-sampling modules. Each down-sampling module includes a first down-sampling module, a second down-sampling module, and a fusion module cascaded with the first down-sampling module and the second down-sampling module. The first down-sampling module includes a first convolution layer and a first down-sampling layer, and the second down-sampling module includes a second down-sampling layer.

In an embodiment, the noise reduction module 1201 is specifically configured to: input the target image data into the down-sampling model, and down-sample, by the down-sampling modules in the down-sampling model, the target image data to obtain down-sampled feature data; input the down-sampled feature data into the up-sampling model, and up-sample, by the up-sampling modules in the up-sampling model, the down-sampled feature data to obtain up-sampled feature data; and obtain, by the output layer, the noise-reduced image data based on the up-sampled feature data and the target image data.

In an embodiment, image data resolution of the channels of the target image is the same, and the noise reduction module 1201 is specifically configured to: for an i^{th} down-sampling module, down-sample input data of the i^{th} down-sampling module to obtain intermediate down-sampled feature data outputted by the i^{th} down-sampling module; where when i=1, the input data of the i^{th} down-sampling module is the target image data, and when i is greater than 1, the input data of the i^{th} down-sampling module is intermediate down-sampled feature data outputted by the i-1^{th} down-sampling module; and take intermediate down-sampled feature data outputted by the last down-sampling module as the down-sampled feature data.

In an embodiment, the noise reduction module 1201 is specifically configured to: for an i^{th} up-sampling module, up-sample input data of the i^{th} up-sampling module to obtain intermediate up-sampled feature data outputted by the i^{th} up-sampling module; where when i=1, the input data of the i^{th} up-sampling module is the down-sampled feature data, and when i is greater than 1, the input data of the i^{th} up-sampling module is aggregated feature data obtained by fusing intermediate up-sampled feature data outputted by the i-1^{th} up-sampling module and intermediate down-sampled feature data outputted by the down-sampling module corresponding to the i^{th} up-sampling module; and take intermediate up-sampled feature data outputted by the last up-sampling module as the up-sampled feature data.

In an embodiment, the noise reduction module 1201 is specifically configured to: input the up-sampled feature data and the target image data into the output layer for fusion to obtain the noise-reduced image data outputted by the output layer.

In an embodiment, image data resolution of the channels of the target image is different, the down-sampling model further includes an additional down-sampling module, and the noise reduction module 1201 is specifically configured to: input a first channel pixel value of the target image included in the target image data into the additional down-sampling module to obtain channel feature data outputted by the additional down-sampling module; fuse the channel feature data with a second channel pixel value of the target image included in the target image data to obtain candidate target image data; for an i^{th} down-sampling module, down-sampling input data of the i^{th} down-sampling module to obtain intermediate down-sampled feature data outputted by the i^{th} down-sampling module; where when i=1, the input data of the i^{th} down-sampling module is the candidate target image data, and when i is greater than 1, the input data of the i^{th} down-sampling module is intermediate down-sampled feature data outputted by the i-1^{th} down-sampling module; and take intermediate down-sampled feature data outputted by the last down-sampling module as the down-sampled feature data.

In an embodiment, the up-sampling model further includes an additional up-sampling module, and the noise reduction module 1201 is specifically configured to: for an i^{th} up-sampling module, up-sample input data of the i^{th} up-sampling module to obtain intermediate up-sampled feature data outputted by the i^{th} up-sampling module; where when i=1, the input data of the i^{th} up-sampling module is the down-sampled feature data, and when i is greater than 1, the input data of the i^{th} up-sampling module is aggregated feature data obtained by fusing intermediate up-sampled feature data outputted by the i-1^{th} up-sampling module and intermediate down-sampled feature data outputted by the down-sampling module corresponding to the i^{th} up-sampling module; and input first intermediate channel feature data corresponding to the first channel pixel value and included in intermediate up-sampled feature data outputted by the last up-sampling module into the additional up-sampling module to obtain the up-sampled feature data outputted by the additional up-sampling module.

In an embodiment, the noise reduction module 1201 is specifically configured to: input the up-sampled feature data and the first channel pixel value in the target image data into the output layer for fusion to obtain candidate noise-reduced image data outputted by the output layer; and obtain the noise-reduced image data based on the candidate noise-reduced image data and second intermediate channel feature data that corresponds to the second channel pixel value and is included in the intermediate up-sampled feature data outputted by the last up-sampling module.

In an embodiment, the noise reduction module 1201 is specifically configured to: down-sample, by the first down-sampling layer, the input data of the i^{th} down-sampling module to obtain first down-sampled feature data outputted by the first down-sampling layer; convolve, by the first convolution layer, the first down-sampled feature data to obtain first convolution feature data outputted by the first convolution layer; down-sample, by the second down-sampling layer, the input data of the i^{th} down-sampling module to obtain second down-sampled feature data outputted by the second down-sampling layer; and fuse, by the fusion module, the first convolution feature data and the second down-sampled feature data to obtain the intermediate down-sampled feature data outputted by the fusion module.

In an embodiment, the up-sampling module includes a second convolution layer and an up-sampling layer that are cascaded; and the noise reduction module 1201 is specifically configured to: convolve, by the second convolution layer, the input data of the i^{th} up-sampling module to obtain second convolution feature data outputted by the second convolution layer; and up-sample, by the up-sampling layer, the second convolution feature data to obtain the intermediate up-sampled feature data outputted by the up-sampling layer.

In an embodiment, the image noise reduction model is used in a RAW image noise reduction module 1201, an RGB image noise reduction module 1201, or a YUV image noise reduction module 1201 in an ISP chip, and correspondingly, a format of the target image is a RAW format, an RGB format, or a YUV format.

In an embodiment, the up-sampling layer up-samples input data of the up-sampling layer by convolution, unpooling, or interpolation.

The modules in the foregoing image noise reduction processing apparatus may be implemented entirely or partially by software, hardware, or a combination thereof. The above modules may be built in or independent of a processor of a computer device in a hardware form, or may be stored in a memory of the computer device in a software form, to facilitate the processor to invoke and perform operations corresponding to the above modules.

In an embodiment, a computer device is provided. The computer device may be a terminal, and a diagram of an internal structure thereof may be shown in FIG. 13. The computer device includes a processor, a memory, a communication interface, a display screen, and an input apparatus that are connected by a system bus. The processor of the computer device is configured to provide computing and control capabilities. The memory of the computer device includes a non-volatile storage medium and an internal memory. The non-volatile storage medium stores an operating system and a computer program. The internal memory provides an environment for running of the operating system and the computer program in the non-volatile storage medium. The communication interface of the computer device is configured to communicate with an external terminal in a wired or wireless manner. The wireless manner may be implemented by WIFI, a mobile cellular network, near field communication (NFC), or other technologies. The program computer is executed by a processor to implement an image noise reduction processing method. The display screen of the computer device may be a liquid crystal display screen or an electronic ink display screen. The input apparatus of the computer device may be a touch layer covering the display screen, or may be a key, a trackball, or a touchpad disposed on a housing of the computer device, or may be an external keyboard, a touchpad, a mouse, or the like.

Those skilled in the art may understand that, in the structure shown in FIG. 13, only a block diagram of a partial structure related to a solution of the present application is shown, which does not constitute a limitation on the computer device to which the solution of the present application is applied. Specifically, the computer device may include more or fewer components than those shown in the figure, or some components may be combined, or a different component deployment may be used.

In an embodiment, an electronic device is further provided, including a memory and a processor. The memory stores a computer program. The processor, when executing the computer program, implements steps in the above method embodiments.

In an embodiment, a computer-readable storage medium is provided, having a computer program stored therein. When the computer program is executed by a processor, steps in the above method embodiments are implemented.

In an embodiment, a computer program product is provided, including a computer program. When the computer program is executed by a processor, steps in the above method embodiments are implemented.

Those of ordinary skill in the art may understand that some or all procedures in the methods in the foregoing embodiments may be implemented by a computer program instructing related hardware, the computer program may be stored in a non-volatile computer-readable storage medium, and when the computer program is executed, the procedures in the foregoing method embodiments may be implemented. Any reference to the memory, database, or other media used in the embodiments provided in the present application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM) or an external cache. By way of illustration instead of limitation, the RAM is available in a variety of forms, such as a static random access memory (SRAM) or a dynamic random access memory (DRAM). The database as referred to in the embodiments provided in the present application may include at least one of a relational database and a non-relational database. The non-relational database may include a blockchain-based distributed database, and the like, but is not limited thereto. The processor as referred to in the embodiments provided in the present application may be a general-purpose processor, a central processing unit, a graphics processor, a digital signal processor, a programmable logic device, a data processing logic device based on quantum computing, and the like, but is not limited thereto.

## Claims

1. A computer-implemented image noise reduction processing method, comprising:
inputting target image data into an image noise reduction model to obtain noise-reduced image data outputted by the image noise reduction model, the target image data comprising pixel values of each channel of a target image;
wherein the image noise reduction model comprises a down-sampling model, an up-sampling model, and an output layer that are cascaded, the down-sampling model comprises n cascaded down-sampling modules, and the up-sampling model comprises n cascaded up-sampling modules that are in one-to-one correspondence with the n down-sampling modules;
each down-sampling module comprise a first down-sampling module, a second down-sampling module, and a fusion module, wherein the first down-sampling module and the second down-sampling module are connected in parallel, and the fusion module is cascaded with output ends of the first down-sampling module and the second down-sampling module;
the first down-sampling module comprises a first down-sampling layer and a first convolution layer that are cascaded, and the second down-sampling module comprises a second down-sampling layer;
wherein inputting the target image data into the image noise reduction model to obtain the noise-reduced image data outputted by the image noise reduction model comprises:
inputting the target image data into the down-sampling model, and down-sampling, by the down-sampling modules in the down-sampling model, the target image data to obtain down-sampled feature data;
inputting the down-sampled feature data into the up-sampling model, and up-sampling, by the up-sampling modules in the up-sampling model, the down-sampled feature data to obtain up-sampled feature data; and
obtaining, by the output layer, the noise-reduced image data based on the up-sampled feature data and the target image data;
wherein in a case where image data resolution of the channels of the target image is the same, down-sampling, by the down-sampling modules in the down-sampling model, the target image data to obtain the down-sampled feature data comprises:
for an i^{th} down-sampling module, down-sampling input data of the i^{th} down-sampling module to obtain intermediate down-sampled feature data outputted by the i^{th} down-sampling module; wherein when i=1, the input data of the i^{th} down-sampling module is the target image data, and when i is greater than 1, the input data of the i^{th} down-sampling module is intermediate down-sampled feature data outputted by an i-1^{th} down-sampling module; and
taking intermediate down-sampled feature data outputted by the last down-sampling module as the down-sampled feature data;
wherein down-sampling the input data of the i^{th} down-sampling module to obtain the intermediate down-sampled feature data outputted by the i^{th} down-sampling module comprises:
down-sampling, by the first down-sampling layer, the input data of the i^{th} down-sampling module to obtain first down-sampled feature data outputted by the first down-sampling layer;
convolving, by the first convolution layer, the first down-sampled feature data to obtain first convolution feature data outputted by the first convolution layer;
down-sampling, by the second down-sampling layer, the input data of the i^{th} down-sampling module to obtain second down-sampled feature data outputted by the second down-sampling layer; and
fusing, by the fusion module, the first convolution feature data and the second down-sampled feature data to obtain the intermediate down-sampled feature data outputted by the fusion module.

2. The method according to claim 1, wherein up-sampling, by the up-sampling modules in the up-sampling model, the down-sampled feature data to obtain the up-sampled feature data comprises:
for an i^{th} up-sampling module, up-sampling input data of the i^{th} up-sampling module to obtain intermediate up-sampled feature data outputted by the i^{th} up-sampling module; wherein when i=1, the input data of the i^{th} up-sampling module is the down-sampled feature data, and when i is greater than 1, the input data of the i^{th} up-sampling module is aggregated feature data obtained by fusing intermediate up-sampled feature data outputted by the i-1^{th} up-sampling module and intermediate down-sampled feature data outputted by a down-sampling module corresponding to the i^{th} up-sampling module; and
taking intermediate up-sampled feature data outputted by the last up-sampling module as the up-sampled feature data.

3. The method according to claim 2, wherein obtaining, by the output layer, the noise-reduced image data based on the up-sampled feature data and the target image data comprises:
inputting the up-sampled feature data and the target image data into the output layer for fusion to obtain the noise-reduced image data outputted by the output layer.

4. The method according to claim 1, wherein in a case where image data resolution of the channels of the target image is different, the down-sampling model further comprises an additional down-sampling module, and inputting the target image data into the down-sampling model, and down-sampling, by the down-sampling modules in the down-sampling model, the target image data to obtain down-sampled feature data comprises:
inputting a first channel pixel value of the target image comprised in the target image data into the additional down-sampling module to obtain channel feature data outputted by the additional down-sampling module;
fusing the channel feature data with a second channel pixel value of the target image comprised in the target image data to obtain candidate target image data;
for an i^{th} down-sampling module, down-sampling input data of the i^{th} down-sampling module to obtain intermediate down-sampled feature data outputted by the i^{th} down-sampling module; wherein when i=1, the input data of the i^{th} down-sampling module is the candidate target image data, and when i is greater than 1, the input data of the i^{th} down-sampling module is intermediate down-sampled feature data outputted by an i-1^{th} down-sampling module; and
taking intermediate down-sampled feature data outputted by the last down-sampling module as the down-sampled feature data.

5. The method according to claim 4, wherein the up-sampling model further comprises an additional up-sampling module, and inputting the down-sampled feature data into the up-sampling model, and up-sampling, by the up-sampling modules in the up-sampling model, the down-sampled feature data to obtain up-sampled feature data comprises:
for an i^{th} up-sampling module, up-sampling input data of the i^{th} up-sampling module to obtain intermediate up-sampled feature data outputted by the i^{th} up-sampling module; wherein when i=1, the input data of the i^{th} up-sampling module is the down-sampled feature data, and when i is greater than 1, the input data of the i^{th} up-sampling module is aggregated feature data obtained by fusing intermediate up-sampled feature data outputted by the i-1^{th} up-sampling module and intermediate down-sampled feature data outputted by a down-sampling module corresponding to the i^{th} up-sampling module; and
inputting first intermediate channel feature data corresponding to the first channel pixel value and comprised in intermediate up-sampled feature data outputted by the last up-sampling module into the additional up-sampling module to obtain the up-sampled feature data outputted by the additional up-sampling module;
wherein the first intermediate channel feature data is the feature data obtained after performing noise reduction on the first channel pixel value through the up-sampling modules, and the intermediate up-sampled feature data outputted by the last up-sampling module further comprises second intermediate channel feature data obtained after performing noise reduction on the second channel pixel value.

6. The method according to claim 5, wherein obtaining, by the output layer, the noise-reduced image data based on the up-sampled feature data and the target image data comprises:
inputting the up-sampled feature data and the first channel pixel value in the target image data into the output layer for fusion to obtain candidate noise-reduced image data outputted by the output layer; and
obtaining the noise-reduced image data based on the candidate noise-reduced image data and second intermediate channel feature data that corresponds to the second channel pixel value and is comprised in the intermediate up-sampled feature data outputted by the last up-sampling module;
wherein the second intermediate channel feature data is obtained after performing noise reduction on the second channel pixel value through the up-sampling modules.

7. The method according to claim 2 or 5, wherein the up-sampling modules each comprise a second convolution layer and an up-sampling layer that are cascaded; and up-sampling the input data of the i^{th} up-sampling module to obtain the intermediate up-sampled feature data outputted by the i^{th} up-sampling module comprises:
convolving, by the second convolution layer, the input data of the i^{th} up-sampling module to obtain second convolution feature data outputted by the second convolution layer; and
up-sampling, by the up-sampling layer, the second convolution feature data to obtain the intermediate up-sampled feature data outputted by the up-sampling layer.

8. The method according to claim 1, wherein the image noise reduction model is applied in a RAW image noise reduction module, an RGB image noise reduction module, or a YUV image noise reduction module in an image signal processor (ISP) chip; and correspondingly, a format of the target image is a RAW format, an RGB format, or a YUV format.

9. The method according to claim 7, wherein the up-sampling layer up-samples input data of the up-sampling layer by convolution, unpooling, or interpolation.

10. An electronic device, comprising a memory and a processor, the memory storing a computer program, wherein the processor, when executing the computer program, implements steps of the method according to any one of claims 1 to 9.

11. A computer-readable storage medium, having a computer program stored therein, wherein when the computer program is executed by a processor, steps of the method according to any one of claims 1 to 9 are implemented.

12. A computer program product, comprising a computer program, wherein when the computer program is executed by a processor, steps of the method according to any one of claims 1 to 9 are implemented.

## Patentansprüche

1. Computerimplementiertes Verarbeitungsverfahren zur Bildrauschminderung, umfassend:
Eingeben von Zielbilddaten in ein Bildrauschminderungsmodell, um rauschgeminderte Bilddaten zu erlangen, die durch das Bildrauschminderungsmodell ausgegeben werden, wobei die Zielbilddaten Pixelwerte jedes Kanals eines Zielbilds umfassen;
wobei das Bildrauschminderungsmodell ein Abtastratenverringerungsmodell, ein Abtastratenerhöhungsmodell und eine Ausgabeschicht umfasst, die kaskadiert sind, das Abtastratenverringerungsmodell n kaskadierte Abtastratenverringerungsmodule umfasst und das Abtastratenerhöhungsmodell n kaskadierte Abtastratenerhöhungsmodule umfasst, die in Eins-zu-Eins-Entsprechung mit den n Abtastratenverringerungsmodulen stehen;
jedes Abtastratenverringerungsmodul ein erstes Abtastratenverringerungsmodul, ein zweites Abtastratenverringerungsmodul und ein Fusionsmodul umfasst, wobei das erste Abtastratenverringerungsmodul und das zweite Abtastratenverringerungsmodul parallel verbunden sind und das Fusionsmodul mit Ausgabeenden des ersten Abtastratenverringerungsmoduls und des zweiten Abtastratenverringerungsmoduls kaskadiert ist;
das erste Abtastratenverringerungsmodul eine erste Abtastratenverringerungsschicht und eine erste Faltungsschicht umfasst, die kaskadiert sind, und das zweite Abtastratenverringerungsmodul eine zweite Abtastratenverringerungsschicht umfasst;
wobei das Eingeben der Zielbilddaten in das Bildrauschminderungsmodell, um die rauschgeminderten Bilddaten zu erlangen, die durch das Bildrauschminderungsmodell ausgegeben werden, Folgendes umfasst:
Eingeben der Zielbilddaten in das Abtastratenverringerungsmodell und Abtastratenverringern der Zielbilddaten durch die Abtastratenverringerungsmodule in dem Abtastratenverringerungsmodell, um abtastratenverringerte Merkmalsdaten zu erlangen;
Eingeben der abtastratenverringerten Merkmalsdaten in das Abtastratenerhöhungsmodell und Abtastratenerhöhen der abtastratenverringerten Merkmalsdaten durch die Abtastratenerhöhungsmodule in dem Abtastratenerhöhungsmodell, um abtastratenerhöhte Merkmalsdaten zu erlangen; und
Erlangen der rauschgeminderten Bilddaten durch die Ausgabeschicht basierend auf den abtastratenerhöhten Merkmalsdaten und den Zielbilddaten;
wobei in einem Fall, in dem die Bilddatenauflösung der Kanäle des Zielbilds gleich ist, das Abtastratenverringern der Zielbilddaten durch die Abtastratenverringerungsmodule in dem Abtastratenverringerungsmodell, um die abtastratenverringerten Merkmalsdaten zu erlangen, Folgendes umfasst:
für ein i-tes Abtastratenverringerungsmodul Abtastratenverringern von Eingabedaten des i-ten Abtastratenverringerungsmoduls, um zwischenzeitliche abtastratenverringerte Merkmalsdaten zu erlangen, die durch das i-te Abtastratenverringerungsmodul ausgegeben werden; wobei, wenn i=1, die Eingabedaten des i-ten Abtastratenverringerungsmoduls die Zielbilddaten sind, und wenn i größer als 1 ist, die Eingabedaten des i-ten Abtastratenverringerungsmoduls zwischenzeitliche abtastratenverringerte Merkmalsdaten sind, die durch ein i-1-tes Abtastratenverringerungsmodul ausgegeben werden; und
Heranziehen von zwischenzeitlichen abtastratenverringerten Merkmalsdaten, die durch das letzte Abtastratenverringerungsmodul ausgegeben werden, als die abtastratenverringerten Merkmalsdaten;
wobei das Abtastratenverringern der Eingabedaten des i-ten Abtastratenverringerungsmoduls, um die zwischenzeitlichen abtastratenverringerten Merkmalsdaten zu erlangen, die durch das i-te Abtastratenverringerungsmodul ausgegeben werden, Folgendes umfasst:
Abtastratenverringern der Eingabedaten des i-ten Abtastratenverringerungsmoduls durch die erste Abtastratenverringerungsschicht, um erste abtastratenverringerte Merkmalsdaten zu erlangen, die durch die erste Abtastratenverringerungsschicht ausgegeben werden;
Falten der ersten abtastratenverringerten Merkmalsdaten durch die erste Faltungsschicht, um erste Faltungsmerkmalsdaten zu erlangen, die durch die erste Faltungsschicht ausgegeben werden;
Abtastratenverringern der Eingabedaten des i-ten Abtastratenverringerungsmoduls durch die zweite Abtastratenverringerungsschicht, um zweite abtastratenverringerte Merkmalsdaten zu erlangen, die durch die zweite Abtastratenverringerungsschicht ausgegeben werden; und
Fusionieren der ersten Faltungsmerkmalsdaten und der zweiten abtastratenverringerten Merkmalsdaten durch das Fusionsmodul, um die zwischenzeitlichen abtastratenverringerten Merkmalsdaten zu erlangen, die durch das Fusionsmodul ausgegeben werden.

2. Verfahren nach Anspruch 1, wobei das Abtastratenerhöhen der abtastratenverringerten Merkmalsdaten durch die Abtastratenerhöhungsmodule in dem Abtastratenerhöhungsmodell, um die abtastratenerhöhten Merkmalsdaten zu erlangen, Folgendes umfasst:
für ein i-tes Abtastratenerhöhungsmodul Abtastratenerhöhen von Eingabedaten des i-ten Abtastratenerhöhungsmoduls, um zwischenzeitliche abtastratenerhöhte Merkmalsdaten zu erlangen, die durch das i-te Abtastratenerhöhungsmodul ausgegeben werden; wobei, wenn i=1, die Eingabedaten des i-ten Abtastratenerhöhungsmoduls die abtastratenverringerten Merkmalsdaten sind, und wenn i größer als 1 ist, die Eingabedaten des i-ten Abtastratenerhöhungsmoduls aggregierte Merkmalsdaten sind, die erlangt werden durch Fusionieren von zwischenzeitlichen abtastratenerhöhten Merkmalsdaten, die durch das i-1-te Abtastratenerhöhungsmodul ausgegeben werden, und zwischenzeitlichen abtastratenverringerten Merkmalsdaten, die durch ein Abtastratenverringerungsmodul ausgegeben werden, das dem i-ten Abtastratenerhöhungsmodul entspricht; und
Heranziehen von zwischenzeitlichen abtastratenerhöhten Merkmalsdaten, die durch das letzte Abtastratenerhöhungsmodul ausgegeben werden, als die abtastratenerhöhten Merkmalsdaten.

3. Verfahren nach Anspruch 2, wobei das Erlangen der rauschgeminderten Bilddaten durch die Ausgabeschicht basierend auf den abtastratenerhöhten Merkmalsdaten und den Zielbilddaten Folgendes umfasst:
Eingeben der abtastratenerhöhten Merkmalsdaten und der Zielbilddaten in die Ausgabeschicht zur Fusion, um die rauschgeminderten Bilddaten zu erlangen, die durch die Ausgabeschicht ausgegeben werden.

4. Verfahren nach Anspruch 1, wobei in einem Fall, in dem die Bilddatenauflösung der Kanäle des Zielbilds unterschiedlich ist, das Abtastratenverringerungsmodell ferner ein zusätzliches Abtastratenverringerungsmodul umfasst und das Eingeben der Zielbilddaten in das Abtastratenverringerungsmodell und Abtastratenverringern der Zielbilddaten durch die Abtastratenverringerungsmodule in dem Abtastratenverringerungsmodell, um abtastratenverringerte Merkmalsdaten zu erlangen, Folgendes umfasst:
Eingeben eines ersten Kanalpixelwerts des Zielbilds, der in den Zielbilddaten umfasst ist, in das zusätzliche Abtastratenverringerungsmodul, um Kanalmerkmalsdaten zu erlangen, die durch das zusätzliche Abtastratenverringerungsmodul ausgegeben werden;
Fusionieren der Kanalmerkmalsdaten mit einem zweiten Kanalpixelwert des Zielbilds, der in den Zielbilddaten umfasst ist, um in Frage kommende Zielbilddaten zu erlangen;
für ein i-tes Abtastratenverringerungsmodul Abtastratenverringern von Eingabedaten des i-ten Abtastratenverringerungsmoduls, um zwischenzeitliche abtastratenverringerte Merkmalsdaten zu erlangen, die durch das i-te Abtastratenverringerungsmodul ausgegeben werden; wobei, wenn i=1, die Eingabedaten des i-ten Abtastratenverringerungsmoduls die in Frage kommenden Zielbilddaten sind, und wenn i größer als 1 ist, die Eingabedaten des i-ten Abtastratenverringerungsmoduls zwischenzeitliche abtastratenverringerte Merkmalsdaten sind, die durch ein i-1-tes Abtastratenverringerungsmodul ausgegeben werden; und
Heranziehen von zwischenzeitlichen abtastratenverringerten Merkmalsdaten, die durch das letzte Abtastratenverringerungsmodul ausgegeben werden, als die abtastratenverringerten Merkmalsdaten.

5. Verfahren nach Anspruch 4, wobei das Abtastratenerhöhungsmodell ferner ein zusätzliches Abtastratenerhöhungsmodul umfasst und das Eingeben der abtastratenverringerten Merkmalsdaten in das Abtastratenerhöhungsmodell und Abtastratenerhöhen der abtastratenverringerten Merkmalsdaten durch die Abtastratenerhöhungsmodule in dem Abtastratenerhöhungsmodell, um abtastratenerhöhte Merkmalsdaten zu erlangen, Folgendes umfasst:
für ein i-tes Abtastratenerhöhungsmodul Abtastratenerhöhen von Eingabedaten des i-ten Abtastratenerhöhungsmoduls, um zwischenzeitliche abtastratenerhöhte Merkmalsdaten zu erlangen, die durch das i-te Abtastratenerhöhungsmodul ausgegeben werden; wobei, wenn i=1, die Eingabedaten des i-ten Abtastratenerhöhungsmoduls die abtastratenverringerten Merkmalsdaten sind, und wenn i größer als 1 ist, die Eingabedaten des i-ten Abtastratenerhöhungsmoduls aggregierte Merkmalsdaten sind, die erlangt werden durch Fusionieren von zwischenzeitlichen abtastratenerhöhten Merkmalsdaten, die durch das i-1-te Abtastratenerhöhungsmodul ausgegeben werden, und zwischenzeitlichen abtastratenverringerten Merkmalsdaten, die durch ein Abtastratenverringerungsmodul ausgegeben werden, das dem i-ten Abtastratenerhöhungsmodul entspricht; und
Eingeben von ersten zwischenzeitlichen Kanalmerkmalsdaten, die dem ersten Kanalpixelwert entsprechen und in zwischenzeitlichen abtastratenerhöhten Merkmalsdaten umfasst sind, die durch das letzte Abtastratenerhöhungsmodul ausgegeben werden, in das zusätzliche Abtastratenerhöhungsmodul, um die abtastratenerhöhten Merkmalsdaten zu erlangen, die durch das zusätzliche Abtastratenerhöhungsmodul ausgegeben werden;
wobei die ersten zwischenzeitlichen Kanalmerkmalsdaten die Merkmalsdaten sind, die nach Durchführen von Rauschminderung an dem ersten Kanalpixelwert durch die Abtastratenerhöhungsmodule erlangt werden, und die zwischenzeitlichen abtastratenerhöhten Merkmalsdaten, die durch das letzte Abtastratenerhöhungsmodul ausgegeben werden, ferner zweite zwischenzeitliche Kanalmerkmalsdaten umfassen, die nach Durchführen von Rauschminderung an dem zweiten Kanalpixelwert erlangt werden.

6. Verfahren nach Anspruch 5, wobei das Erlangen der rauschgeminderten Bilddaten durch die Ausgabeschicht basierend auf den abtastratenerhöhten Merkmalsdaten und den Zielbilddaten Folgendes umfasst:
Eingeben der abtastratenerhöhten Merkmalsdaten und des ersten Kanalpixelwerts in den Zielbilddaten in die Ausgabeschicht zur Fusion, um in Frage kommende rauschgeminderte Bilddaten zu erlangen, die durch die Ausgabeschicht ausgegeben werden; und
Erlangen der rauschgeminderten Bilddaten basierend auf den in Frage kommenden rauschgeminderten Bilddaten und zweiten zwischenzeitlichen Kanalmerkmalsdaten, die dem zweiten Kanalpixelwert entsprechen und in den zwischenzeitlichen abtastratenerhöhten Merkmalsdaten umfasst sind, die durch das letzte Abtastratenerhöhungsmodul ausgegeben werden;
wobei die zweiten zwischenzeitlichen Kanalmerkmalsdaten nach Durchführen von Rauschminderung an dem zweiten Kanalpixelwert durch die Abtastratenerhöhungsmodule erlangt werden.

7. Verfahren nach Anspruch 2 oder 5, wobei die Abtastratenerhöhungsmodule jeweils eine zweite Faltungsschicht und eine Abtastratenerhöhungsschicht umfassen, die kaskadiert sind; und das Abtastratenerhöhen der Eingabedaten des i-ten Abtastratenerhöhungsmoduls, um die zwischenzeitlichen abtastratenerhöhten Merkmalsdaten zu erlangen, die durch das i-te Abtastratenerhöhungsmodul ausgegeben werden, Folgendes umfasst:
Falten der Eingabedaten des i-ten Abtastratenerhöhungsmoduls durch die zweite Faltungsschicht, um zweite Faltungsmerkmalsdaten zu erlangen, die durch die zweite Faltungsschicht ausgegeben werden; und
Abtastratenerhöhen der zweiten Faltungsmerkmalsdaten durch die Abtastratenerhöhungsschicht, um die zwischenzeitlichen abtastratenerhöhten Merkmalsdaten zu erlangen, die durch die Abtastratenerhöhungsschicht ausgegeben werden.

8. Verfahren nach Anspruch 1, wobei das Bildrauschminderungsmodell in einem RAW-Bildrauschminderungsmodul, einem RGB-Bildrauschminderungsmodul oder einem YUV-Bildrauschminderungsmodul in einem Bildsignalprozessorchip (ISP-Chip) angewendet wird; und entsprechend ein Format des Zielbilds ein RAW-Format, ein RGB-Format oder ein YUV-Format ist.

9. Verfahren nach Anspruch 7, wobei die Abtastratenerhöhungsschicht Eingabedaten der Abtastratenerhöhungsschicht durch Faltung, Unpooling oder Interpolation abtastratenerhöht.

10. Elektronische Vorrichtung, umfassend einen Speicher und einen Prozessor, wobei der Speicher ein Computerprogramm speichert, wobei der Prozessor, wenn das Computerprogramm ausgeführt wird, Schritte des Verfahrens nach einem der Ansprüche 1 bis 9 implementiert.

11. Computerlesbares Speichermedium, das ein darin gespeichertes Computerprogramm aufweist, wobei, wenn das Computerprogramm durch einen Prozessor ausgeführt wird, Schritte des Verfahrens nach einem der Ansprüche 1 bis 9 implementiert werden.

12. Computerprogrammprodukt, umfassend ein Computerprogramm, wobei, wenn das Computerprogramm durch einen Prozessor ausgeführt wird, Schritte des Verfahrens nach einem der Ansprüche 1 bis 9 implementiert werden.

## Revendications

1. Procédé de traitement de réduction de bruit d'images mis en œuvre par ordinateur comprenant :
l'entrée de données d'image cible dans un modèle de réduction de bruit d'image pour obtenir des données d'image à bruit réduit délivrées en sortie par le modèle de réduction de bruit d'image, les données d'image cible comprenant des valeurs de pixel de chaque canal d'une image cible ;
ledit modèle de réduction de bruit d'image comprenant un modèle de sous-échantillonnage, un modèle de suréchantillonnage et une couche de sortie qui sont en cascade, ledit modèle de sous-échantillonnage comprenant n modules de sous-échantillonnage en cascade, et ledit modèle de suréchantillonnage comprenant n modules de suréchantillonnage en cascade qui sont en correspondance biunivoque avec les n modules de sous-échantillonnage ;
chaque module de sous-échantillonnage comprenant un premier module de sous-échantillonnage, un second module de sous-échantillonnage et un module de fusion, ledit premier module de sous-échantillonnage et ledit second module de sous-échantillonnage étant connectés en parallèle, et ledit module de fusion étant en cascade avec les extrémités de sortie du premier module de sous-échantillonnage et du second module de sous-échantillonnage ;
ledit premier module de sous-échantillonnage comprenant une première couche de sous-échantillonnage et une première couche de convolution qui sont en cascade, et ledit second module de sous-échantillonnage comprenant une seconde couche de sous-échantillonnage ;
ladite entrée des données d'image cible dans le modèle de réduction de bruit d'image pour obtenir les données d'image à bruit réduit délivrées en sortie par le modèle de réduction de bruit d'image comprenant :
l'entrée des données d'image cible dans le modèle de sous-échantillonnage, et le sous-échantillonnage, par les modules de sous-échantillonnage dans le modèle de sous-échantillonnage, des données d'image cible pour obtenir des données de caractéristiques sous-échantillonnées ;
l'entrée des données de caractéristiques sous-échantillonnées dans le modèle de suréchantillonnage, et le suréchantillonnage, par les modules de suréchantillonnage dans le modèle de suréchantillonnage, des données de caractéristiques sous-échantillonnées pour obtenir des données de caractéristiques suréchantillonnées ; et
l'obtention, par la couche de sortie, des données d'image à bruit réduit sur la base des données de caractéristiques suréchantillonnées et des données d'image cible ;
dans un cas où la résolution de données d'image des canaux de l'image cible est la même, ledit sous-échantillonnage, par les modules de sous-échantillonnage dans le modèle de sous-échantillonnage, des données d'image cible pour obtenir les données de caractéristi ques sous-échantillonnées comprenant :
pour un i^{ième} module de sous-échantillonnage, ledit sous-échantillonnage des données d'entrée du i^{ième} module de sous-échantillonnage pour obtenir des données de caractéristiques sous-échantillonnées intermédiaires délivrées en sortie par le i^{ième} module de sous-échantillonnage ; lorsque i = 1, lesdites données d'entrée du i^{ième} module de sous-échantillonnage étant les données d'image cible, et lorsque i est supérieur à 1, lesdites données d'entrée du i^{ième} module de sous-échantillonnage étant des données de caractéristiques sous-échantillonnées intermédiaires délivrées en sortie par un i-1^{ième} module de sous-échantillonnage ; et
la prise en compte des données de caractéristiques sous-échantillonnées intermédiaires délivrées en sortie par le dernier module de sous-échantillonnage en tant que données de caractéristiques sous-échantillonnées ;
ledit sous-échantillonnage des données d'entrée du i^{ième} module de sous-échantillonnage pour obtenir les données de caractéristiques sous-échantillonnées intermédiaires délivrées en sortie par le i^{ième} module de sous-échantillonnage comprenant :
ledit sous-échantillonnage, par la première couche de sous-échantillonnage, des données d'entrée du i^{ième} module de sous-échantillonnage pour obtenir les premières données de caractéristiques sous-échantillonnées délivrées en sortie par la première couche de sous-échantillonnage ;
la convolution, par la première couche de convolution, des premières données de caractéristiques sous-échantillonnées pour obtenir des premières données de caractéristiques de convolution délivrées en sortie par la première couche de convolution ;
le sous-échantillonnage, par la seconde couche de sous-échantillonnage, des données d'entrée du i^{ième} module de sous-échantillonnage pour obtenir des secondes données de caractéristiques sous-échantillonnées délivrées en sortie par la seconde couche de sous-échantillonnage ; et
la fusion, par le module de fusion, des premières données de caractéristiques de convolution et des secondes données de caractéristiques sous-échantillonnées pour obtenir les données de caractéristiques sous-échantillonnées intermédiaires délivrées en sortie par le module de fusion.

2. Procédé selon la revendication 1, ledit suréchantillonnage, par les modules de suréchantillonnage dans le modèle de suréchantillonnage, des données de caractéristiques sous-échantillonnées pour obtenir les données de caractéristiques suréchantillonnées comprenant :
pour un i^{ième} module de suréchantillonnage, ledit suréchantillonnage des données d'entrée du i^{ième} module de suréchantillonnage pour obtenir des données de caractéristiques suréchantillonnées intermédiaires délivrées en sortie par le i^{ième} module de suréchantillonnage ; lorsque i = 1, lesdites données d'entrée du i^{ième} module de suréchantillonnage étant les données de caractéristiques sous-échantillonnées, et lorsque i est supérieur à 1, lesdites données d'entrée du i^{ième} module de suréchantillonnage étant des données de caractéristiques agrégées obtenues par fusion des données de caractéristiques suréchantillonnées intermédiaires délivrées en sortie par le i-1^{ième} module de suréchantillonnage et des données de caractéristiques sous-échantillonnées intermédiaires délivrées en sortie par un module de sous-échantillonnage correspondant au i^{ième} module de suréchantillonnage ; et
la prise en compte des données de caractéristiques suréchantillonnées intermédiaires délivrées en sortie par le dernier module de suréchantillonnage en tant que données de caractéristiques suréchantillonnées.

3. Procédé selon la revendication 2, ladite obtention, par la couche de sortie, des données d'image à bruit réduit sur la base des données de caractéristiques suréchantillonnées et des données d'image cible comprenant :
l'entrée des données de caractéristiques suréchantillonnées et des données d'image cible dans la couche de sortie pour la fusion afin d'obtenir les données d'image à bruit réduit délivrées en sortie par la couche de sortie.

4. Procédé selon la revendication 1, dans un cas où la résolution des données d'image des canaux de l'image cible est différente, ledit modèle de sous-échantillonnage comprenant en outre un module de sous-échantillonnage supplémentaire, et l'entrée des données d'image cible dans le modèle de sous-échantillonnage, et le sous-échantillonnage, par les modules de sous-échantillonnage dans le modèle de sous-échantillonnage, des données d'image cible pour obtenir des données de caractéristiques sous-échantillonnées comprenant :
l'entrée d'une première valeur de pixel de canal de l'image cible comprise dans les données d'image cible dans le module de sous-échantillonnage supplémentaire pour obtenir des données de caractéristiques de canal délivrées en sortie par le module de sous-échantillonnage supplémentaire ;
la fusion des données de caractéristiques de canal avec une seconde valeur de pixel de canal de l'image cible comprise dans les données d'image cible pour obtenir des données d'image cible candidates ;
pour un i^{ième} module de sous-échantillonnage, ledit sous-échantillonnage de données d'entrée du i^{ième} module de sous-échantillonnage pour obtenir des données de caractéristiques sous-échantillonnées intermédiaires délivrées en sortie par le i^{ième} module de sous-échantillonnage ; lorsque i = 1, lesdites données d'entrée du i^{ième} module de sous-échantillonnage étant les données d'image cible candidates, et lorsque i est supérieur à 1, lesdites données d'entrée du i^{ième} module de sous-échantillonnage étant des données de caractéristiques sous-échantillonnées intermédiaires délivrées en sortie par un i-1^{ième} module de sous-échantillonnage ; et
la prise en compte des données de caractéristiques sous-échantillonnées intermédiaires délivrées en sortie par le dernier module de sous-échantillonnage en tant que données de caractéristiques sous-échantillonnées.

5. Procédé selon la revendication 4, ledit modèle de suréchantillonnage comprenant en outre un module de suréchantillonnage supplémentaire, et ladite entrée des données de caractéristiques sous-échantillonnées dans le modèle de suréchantillonnage, et ledit suréchantillonnage, par les modules de suréchantillonnage dans le modèle de suréchantillonnage, des données de caractéristiques sous-échantillonnées pour obtenir des données de caractéristiques suréchantillonnées comprenant :
pour un i^{ième} module de suréchantillonnage, ledit suréchantillonnage de données d'entrée du i^{ième} module de suréchantillonnage pour obtenir des données de caractéristiques suréchantillonnées intermédiaires délivrées en sortie par le i^{ième} module de suréchantillonnage ; lorsque i = 1, lesdites données d'entrée du i^{ième} module de suréchantillonnage étant les données de caractéristiques sous-échantillonnées, et lorsque i est supérieur à 1, lesdites données d'entrée du i^{ième} module de suréchantillonnage étant des données de caractéristiques agrégées obtenues par fusion des données de caractéristiques suréchantillonnées intermédiaires délivrées en sortie par le i-1^{ième} module de suréchantillonnage et des données de caractéristiques sous-échantillonnées intermédiaires délivrées en sortie par un module de sous-échantillonnage correspondant au i^{ième} module de suréchantillonnage ; et
l'entrée de premières données de caractéristiques de canal intermédiaires correspondant à la première valeur de pixel de canal et comprises dans des données de caractéristiques suréchantillonnées intermédiaires délivrées en sortie par le dernier module de suréchantillonnage dans le module de suréchantillonnage supplémentaire pour obtenir les données de caractéristiques suréchantillonnées délivrées en sortie par le module de suréchantillonnage supplémentaire ;
lesdites premières données de caractéristiques de canal intermédiaires étant les données de caractéristiques obtenues après la réalisation de la réduction de bruit sur la première valeur de pixel de canal par l'intermédiaire des modules de suréchantillonnage, et lesdites données de caractéristiques suréchantillonnées intermédiaires délivrées en sortie par le dernier module de suréchantillonnage comprenant en outre des secondes données de caractéristiques de canal intermédiaires obtenues après la réalisation de la réduction de bruit sur la seconde valeur de pixel de canal.

6. Procédé selon la revendication 5, ladite obtention, par la couche de sortie, des données d'image à bruit réduit sur la base des données de caractéristiques suréchantillonnées et des données d'image cible comprenant :
l'entrée des données de caractéristiques suréchantillonnées et de la première valeur de pixel de canal dans les données d'image cible dans la couche de sortie pour la fusion afin d'obtenir des données d'image à bruit réduit candidates délivrées en sortie par la couche de sortie ; et
l'obtention des données d'image à bruit réduit sur la base des données d'image à bruit réduit candidates et des secondes données de caractéristiques de canal intermédiaires qui correspondent à la seconde valeur de pixel de canal et sont comprises dans les données de caractéristiques suréchantillonnées intermédiaires délivrées en sortie par le dernier module de suréchantillonnage ;
lesdites secondes données de caractéristiques de canal intermédiaires étant obtenues après la réalisation de la réduction de bruit sur la seconde valeur de pixel de canal par l'intermédiaire des modules de suréchantillonnage.

7. Procédé selon la revendication 2 ou 5, lesdits modules de suréchantillonnage comprenant chacun une seconde couche de convolution et une couche de suréchantillonnage qui sont en cascade ; et ledit suréchantillonnage des données d'entrée du i^{ième} module de suréchantillonnage pour obtenir les données de caractéristiques suréchantillonnées intermédiaires délivrées en sortie par le i^{ième} module de suréchantillonnage comprenant :
la convolution, par la seconde couche de convolution, des données d'entrée du i^{ième} module de suréchantillonnage pour obtenir les secondes données de caractéristiques de convolution délivrées en sortie par la seconde couche de convolution ; et
le suréchantillonnage, par la couche de suréchantillonnage, des secondes données de caractéristiques de convolution pour obtenir les données de caractéristiques suréchantillonnées intermédiaires délivrées en sortie par la couche de suréchantillonnage.

8. Procédé selon la revendication 1, ledit modèle de réduction de bruit d'image étant appliqué dans un module de réduction de bruit d'image RAW, un module de réduction de bruit d'image RVB ou un module de réduction de bruit d'image YUV dans une puce de processeur de signal d'image (ISP) ; et en conséquence, un format de l'image cible étant un format RAW, un format RVB ou un format YUV.

9. Procédé selon la revendication 7, ladite couche de suréchantillonnage suréchantillonnant des données d'entrée de la couche de suréchantillonnage par convolution, dégroupement ou interpolation.

10. Dispositif électronique, comprenant une mémoire et un processeur, la mémoire stockant un programme informatique, ledit processeur, lors de l'exécution du programme informatique, mettant en œuvre les étapes du procédé selon l'une quelconque des revendications 1 à 9.

11. Support de stockage lisible par ordinateur dans lequel est stocké un programme informatique, lorsque le programme informatique est exécuté par un processeur, les étapes du procédé selon l'une quelconque des revendications 1 à 9 étant mises en œuvre.

12. Produit-programme informatique, comprenant un programme informatique, lorsque le programme informatique est exécuté par un processeur, lesdites étapes du procédé selon l'une quelconque des revendications 1 à 9 étant mises en œuvre.
